(19) Europäisches Patentamt
European Patent Office
Office européen des brevets

(11) EP 3 208 632 B1

(12) EUROPEAN PATENT SPECIFICATION

(45) Date of publication and mention of the grant of the patent:
**24.04.2019 Bulletin 2019/17**

(51) Int Cl.:
***G01S 13/28*** *(2006.01)* ***G01S 13/93*** *(2006.01)*
***G01S 7/288*** *(2006.01)*

(21) Application number: **17154530.4**

(22) Date of filing: **03.02.2017**

(54) **RADAR APPARATUS AND RADAR METHOD**

RADARVORRICHTUNG UND RADARVERFAHREN

APPAREIL RADAR ET PROCÉDÉ RADAR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.02.2016 JP 2016030106**

(43) Date of publication of application:
**23.08.2017 Bulletin 2017/34**

(73) Proprietor: **Panasonic Corporation**
**Kadoma-shi, Osaka 571-8501 (JP)**

(72) Inventor: **KISHIGAMI, Takaaki**
**Osaka-shi, Osaka 540-6207 (JP)**

(74) Representative: **Grünecker Patent- und Rechtsanwälte**
**PartG mbB**
**Leopoldstraße 4**
**80802 München (DE)**

(56) References cited:
**US-A1- 2013 127 655**
**US-A1- 2013 176 166**
**US-B1- 6 489 923**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

BACKGROUND

1. Technical Field

The present disclosure relates to a radar apparatus and a radar method that detects the velocity of a target relative to a radar by detecting Doppler frequency.

2. Description of the Related Art

In recent years, a radar apparatus has been under consideration which uses short-wavelength radar transmission signals including microwaves and millimeter waves that yield high resolution. Further, for improvement in outdoor safety, it is desired to develop a radar apparatus that detects targets including pedestrians as well as vehicles in a wide angular range.

When a target or a radar apparatus moves, a reflected radar wave experiences a Doppler frequency shift that is proportional in amount to the relative velocity between the target and the radar apparatus. This allows the radar apparatus to calculate the relative velocity between the target and the radar by detecting Doppler frequency.

Japanese Unexamined Patent Application Publication No. 2002-131421, for example, discloses a method for detecting Doppler frequencies, a method based on FFT (fast Fourier transform) processing that includes receiving pulses in return for transmitting N pulses at different points in time, converting the received pulses into the frequency domain by FFT processing, and detecting Doppler frequencies from spectrum peaks. It should be noted that the method for detecting Doppler frequencies may be based on DFT (discrete Fourier transform) instead of being based on FFT. A method based on FFT processing is smaller in computation amount and more frequently used than a method based on DFT processing. Thus, a method based on FFT processing is described in the following. It should be noted that the method for detecting Doppler frequencies brings about similar effects even in a case where it is based on DFT processing.

Note here that a method based on FFT processing may cause Doppler frequency folding in FFT result. Japanese Unexamined Patent Application Publication No. 2014-89115, for example, discloses a technique for correcting a Doppler frequency folding caused in a method based on FFT processing.

Japanese Unexamined Patent Application Publication No. 2014-89115 discloses a scheme (staggered scheme) for correcting the folding in Doppler frequency.

The staggered scheme includes making transmissions at two types of transmission period PRIs (pulse repetition intervals). Therefore, for the same gains of addition of peak Doppler frequency spectra that are obtained at two types of cycle period PRIs, respectively, the stagger scheme requires double the duration of transmission than a scheme that is not based on the staggered scheme.

Further, US 2013/0127655 discloses a radar receiver having plural antenna system processors each for performing coherent integration on the basis of correlation values between a reception signal and a transmission signal using correction amounts for phase variations corresponding to plural Doppler frequencies, plural correlation matrix generators for generating, for each of the plural different Doppler frequencies, correlation matrices which are pieces of phase difference information relating to an arrangement of reception antennas on the basis of sets of outputs of the coherent integration, respectively, an adder for adding together outputs of the plural correlation matrix generators, and an incoming direction estimator for estimating an incoming direction of reflection waves on the basis of outputs of the adder.

US 6,489,923 discloses how in a cellular mobile telecommunications system the position of a mobile station can be estimated in terms of its bearing and range from a cell site: A multi-element direction finding antenna at the cell site receives signals from the mobile station and a receiver circuit estimates the bearing using the relative phase of signals received at different antenna elements and estimates the range by measuring round trip delay of signals to and from the mobile station. Motion of the mobile station can introduce errors into the bearing estimate due to frequency offset and frequency spread when element sampling is non-simultaneous. Compensation for these errors is introduced by using signal samples successively received at the same antenna element to estimate Doppler frequency offset and spread. It is necessary to ensure accurate calibration of the direction finding antenna and the receiver circuit. This is done by injecting calibration signals into the circuit near the antenna or into the antenna itself from a near field probe. Other aspects of calibration, such as antenna position, are calibrated using a remote beacon. A beacon emulating a mobile station but at a fixed, known location, or a beacon at an adjacent cell site may be used.

US 2013/0176166 discloses a first sector radar generating signals which are obtained by modulating a first code sequence at a first transmission cycle, obtained by modulating a second code sequence at a second transmission cycle, obtained by modulating the first code sequence at a third transmission cycle, and obtained by modulating the second code sequence at a fourth transmission cycle respectively. Further, a second sector radar generates signals which are obtained by modulating the second code sequence at the first transmission cycle, obtained by modulating, at the second transmission cycle, a third code sequence having the opposite polarity to the first code sequence, obtained by modulating, at the third transmission cycle, a fourth code sequence having the opposite polarity to the second code sequence, and obtained by modulating the first code sequence at the fourth transmission cycle respectively.

## SUMMARY

One non-limiting and exemplary embodiment facilitates providing a radar apparatus that can correct a folding in Doppler frequency while suppressing an increase in duration of transmission.

In one general aspect, the techniques disclosed here feature a radar apparatus including: a radar transmitter, which in operation, repeatedly transmits a radar transmission signal every radar transmission period, the radar transmission signal including a plurality of pulse-compression codes; and a radar receiver, which in operation, receives a reflected wave signal which is the radar transmission signal being reflected by an object, wherein the radar receiver includes sampling circuitry, which in operation, performs discrete sampling on the reflected wave signal at discrete times based on the radar transmission period, correlation calculation circuitry, which in operation, calculates correlation values between results of the discrete sampling and the plurality of pulse-compression codes every radar transmission period, a plurality of adder circuitry, which in operation, add the correlation values calculated every radar transmission period, the number of additions being different for each of the plurality of adders, a plurality of Doppler frequency analysis circuitry, which in operation, each perform Doppler frequency analyze on the respective results of the additions by the plurality of adder circuitry through fast Fourier transforms, and Doppler frequency correction circuitry, which in operation, (i) determines whether or not a folding in a Doppler frequency included in the reflected wave signal is present according to an amplitude difference or phase difference between two of the peaks of the spectra of the results of the analyses performed by the plurality of Doppler frequency analysis circuitry, and (ii) makes a correction to the Doppler frequency included in the reflected wave signal on the basis of the results of the analyses in a case it is determined that the folding is present.

The aspect of the present disclosure makes it possible to correct a folding in Doppler frequency without an increase in duration of transmission.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

## BRIEF DESCRIPTION OF THE DRAWINGS

- Fig. 1 explains the value of addition of autocorrelation value calculation results ($R_{aa}(\tau)$, $R_{bb}(\tau)$);
- Fig. 2 explains an example of time division transmission of complementary codes $a_n$ and $b_n$ in a pulse-compression radar;
- Fig. 3 is a block diagram showing a configuration of a radar apparatus according to an embodiment of the present disclosure;
- Fig. 4 shows an example of a radar transmission signal that is transmitted from a radar transmitter;
- Fig. 5 shows a modification of a radar transmission signal generator;
- Fig. 6 explains radar transmission signal timings and measuring ranges;
- Fig. 7 shows a relationship between radar transmission periods $T_r$ during which $N_{p1}$ = 16 and $N_{p2}$ = 8 and sections of addition in first and second adders;
- Fig. 8 shows a relationship between a component of Doppler frequency $f_d$ that is inputted to a Doppler frequency analyzer and a peak Doppler frequency that is detected;
- Fig. 9A shows the characteristics of amplitude responses to a Doppler frequency component that is inputted to the first and second adders in a case where $N_{p1}$ = 32 and $N_{p2}$ = 16;
- Fig. 9B shows the characteristics of phase responses to a Doppler frequency component that is inputted to the first and second adders in a case where $N_{p1}$ = 32 and $N_{p2}$ = 16;
- Fig. 10A shows an example of a configuration of a signal processor including three adders;
- Fig. 10B shows an example of a configuration of a signal processor including three adders;
- Fig. 11A shows the characteristics of amplitude responses in a case where the first adder adds $N_{p1}$ = 32, the second adder adds $N_{p2}$ = 16, and the third adder adds $N_{p3}$ = 8; and
- Fig. 11B shows the characteristics of phase responses in a case where the first adder adds $N_{p1}$ = 32, the second adder adds $N_{p2}$ = 16, and the third adder adds $N_{p3}$ = 8.

DETAILED DESCRIPTION

For example, as a radar apparatus, a pulse radar apparatus has been known which repeatedly emits pulse waves. A signal that is received by a wide-angle pulse radar that detects at least either a vehicle or a pedestrian in a wide angular range is one obtained by mixing a plurality of reflected waves from a target (e.g. a vehicle) that is present at a short distance and from a target (e.g. a pedestrian) that is present at a long distance. For this reason, a radar transmitter that transmits a radar wave is required to be configured to transmit a pulse wave or a pulse-modulated wave having an autocorrelation characteristic that forms a low-range side lobe (such a characteristic being hereinafter referred to as "low-range side lobe characteristic"), and a radar receiver that receives a radar wave reflected by a target is required to be configured to have a wide reception dynamic range.

Known examples of radar apparatuses that use pulse waves (or pulse-modulated waves) for achieving low-range side lobe characteristics are pulse-compression radar apparatuses using Barker codes, M sequence codes, complementary codes, or the like. The following describes, as an example, a case where complementary codes are used. The complementary codes include two code sequences (hereinafter referred to as "complementary codes $a_n$ and $b_n$", where n = 1, ..., L. L is the code sequence length). The autocorrelation correlation calculation of each of the two code sequences is expressed by mathematical expression (1):

$$R_{aa}(\tau) = \sum_{n=1}^{L} a_n a_{n+\tau}^{*}$$

$$R_{bb}(\tau) = \sum_{n=1}^{L} b_n b_{n+\tau}^{*} \qquad (1)$$

Note, however, that, in mathematical expression (1), $a_n = 0$ and $b_n = 0$ when n > L or n < 1. Further, each asterisk denotes a complex conjugate operator. As shown in Fig. 1 and by mathematical expression (2) below, when the lag time (delay time or shift time) $\tau$ is 0, the value of addition of autocorrelation value calculation results ($R_{aa}(\tau)$, $R_{bb}(\tau)$) derived according to mathematical expression (1) reaches its peak, and when the delay time $\tau$ is not 0, the value of addition of the autocorrelation value calculation results ($R_{aa}(\tau)$, $R_{bb}(\tau)$) is 0 without range side lobes. It should be noted that Fig. 1 explains the value of addition of the autocorrelation value calculation results ($R_{aa}(\tau)$, $R_{bb}(\tau)$). In Fig. 1, the horizontal axis represents the lag time ($\tau$) in the autocorrelation value calculation, and the vertical axis represents the autocorrelation value calculation results thus calculated.

$$R_{aa}(\tau) + R_{bb}(\tau) \neq 0, when\, \tau = 0$$

$$R_{bb}(\tau) + R_{bb}(\tau) = 0, when\, \tau \neq 0 \qquad (2)$$

Fig. 2 shows complementary codes of a pulse-compression radar that makes time division transmission by switching between a high-frequency signal generated on the basis of the aforementioned complementary code $a_n$ and a high-frequency signal generated on the basis of the aforementioned complementary code $b_n$ every predetermined transmission period. Fig. 2 explains an example of time division transmission of the complementary codes $a_n$ and $b_n$ in the pulse-compression radar. In Fig. 2, the complementary codes $a_n$ and $b_n$ have code sequence lengths L and durations $T_c$, and durations of each subpulse are $T_p$.

An example of a method for generating complementary codes is disclosed in Budisin, S.Z., "New complementary pairs of sequences," Electron. Lett, 1990, 26, (13), pp. 881-883. For example, a conventional pulse-compression radar generates complementary codes of code sequence lengths L of 4, 8, 16, 32, ..., 2P in sequence on the basis of a code sequence a = [1 1] and a code sequence b = [1 -1] having a complementarity with an element '1' or '-1'. The conventional pulse-compression radar requires a larger dynamic range (required reception dynamic range) for reception as the complementary codes become longer in code sequence length. Meanwhile, the conventional pulse-compression radar becomes lower in peak side lobe ratio (PSR) as the complementary codes become shorter in code sequence length. This makes it possible to reduce the required reception dynamic range even in the case of a mixture of a plurality of reflected waves from a short-distance target and from a long-distance target.

Meanwhile, in a case where M sequence codes are used instead of the complementary codes, the PSR is given by 20 log (1/L) [dB]. Accordingly, in order to achieve low-range side lobes through the M sequence codes, the conventional pulse-compression radar requires code sequence lengths that are longer than those of the complementary codes (for example, L = 1024 in a case where PSR = 60 dB).

Further, a conventional pulse radar apparatus that transmits and receives pulse radar signals can calculate the velocity of a target relative to the radar apparatus by detecting the Doppler frequency of the target. The conventional pulse radar apparatus is required to detect the Doppler frequency of the target with high accuracy to calculate the relative velocity with high accuracy.

An example of a method for detecting Doppler frequencies is a method based on FFT (fast Fourier transform) processing. In the method based on FFT processing, the conventional pulse radar apparatus receives pulses in return for transmitting N pulses at different points in time, converts the received pulses into the frequency domain by FFT processing, and detects Doppler frequencies from spectrum peaks. Another example of a method for detecting Doppler frequencies is a method, such as the one disclosed in Japanese Unexamined Patent Application Publication No. 2002-131421, which includes receiving pulses in return for transmitting $N_c \times N$ (where $N_c$ is an integer value) pulses at different points in time, converting the received pulses into the frequency domain by FFT processing after subjecting every $N_c$ of the received pulses to coherent addition, and detecting Doppler velocities from spectrum peaks.

In the method based on FFT processing, the conventional pulse radar apparatus performs a Doppler frequency analysis with N received pulses, thus yielding a gain of addition with an N-tuple SNR in a Doppler frequency spectrum reaching its peaks. Further, also in a case where two or more reflected signals are included at the same distance, the conventional pulse radar apparatus can detect their respective Doppler frequencies. Note here that the capability of separating a plurality of Doppler frequencies (Doppler frequency resolution) can be enhanced by lengthening the duration of transmission of N transmitted pulses.

However, with the aforementioned method based on FFT processing, the conventional radar apparatus suffers from the occurrence of a Doppler frequency folding in FFT result, as the conventional radar apparatus cannot satisfy the sampling theorem in a case where the Doppler frequency of a target is higher than $1/(2\Delta T)$ with respect to the time intervals $\Delta T$ of transmission of transmitted pulses. As disclosed in Japanese Unexamined Patent Application Publication No. 2002-131421, the conventional radar apparatus suffers from the occurrence of a Doppler frequency folding in FFT result, as the sampling theorem becomes unsatisfied in a case where the Doppler frequency of a target as obtained by receiving pulses in return for transmitting N pulses at different points in time and converting the received pulses into the frequency domain by FFT processing after subjecting every $N_c$ of the received pulses to coherent addition is higher than $1/(2N_c\Delta T)$.

An example of a technique for preventing a decrease in the precision of detection of Doppler frequencies due to such occurrence of a folding is the staggered scheme disclosed in Japanese Unexamined Patent Application Publication No. 2014-89115.

However, the duration of transmission of transmitted pulses in the staggered scheme is double the duration of transmission in another scheme. Further, in the case of reception of a plurality of reflected waves from the same distance, the staggered scheme is complex in pairing of FFT spectrum peaks at two types of cycle period PRIs.

Under such circumstance, there has been a demand for a radar apparatus that can suppress an increase in duration of transmission and correct a folding in Doppler frequency. Further, there has been a demand for a radar apparatus that can easily process pairing of FFT spectrum peaks. A radar apparatus according to an embodiment of the present disclosure that is described below suppresses an increase in duration of transmission, corrects a folding in Doppler frequency, and easily achieves pairing of FFT spectrum peaks. Embodiment

An embodiment of the present disclosure is described in detail below with reference to the drawings. It should be noted that, in the embodiment below, the same constituent elements are given the same reference numerals, and duplication of description is omitted.

Configuration of Radar Apparatus 10

Fig. 3 is a block diagram showing a configuration of a radar apparatus 10 according to an embodiment of the present disclosure. As shown in Fig. 3, the radar apparatus 10 includes a radar transmitter 100, a radar receiver 200, and a reference signal generator 300.

Configuration of Radar Transmitter 100

In Fig. 3, the radar transmitter 100 receives a reference signal from the reference signal generator 300 and generates a high-frequency radar signal (radar transmission signal) in accordance with the reference signal. Then, the radar transmitter 100 transmits the radar transmission signal with a predetermined radar transmission period $T_r$.

The radar receiver 200 receives a reflected wave signal through each array antenna. The reflected wave signal is a radar transmission signal reflected by a target (not illustrated). The radar receiver 200 processes, with reference to the reference signal inputted from the reference signal generator 300, a reflected wave signal received through each antenna element of the array antenna and, for example, at least either detects the presence or absence of the target or estimates the direction of the target. The radar receiver 200 performs coherent integration processing and Doppler frequency analysis processing (e.g. including Fourier transform processing) in the signal processing. It should be noted that the target is an object to be detected by the radar apparatus 10 and, for example, includes at least either a vehicle or a person.

The reference signal generator 300 is connected to the radar transmitter 100 and the radar receiver 200. The reference signal generator 300 commonly supplies the reference signal to the radar transmitter 100 and the radar receiver 200. The reference signal is used to synchronize processes in the radar transmitter 100 and the radar receiver 200.

Configuration of Radar Transmitter 100

The radar transmitter 100 includes a radar transmission signal generator 101, a radio transmitter 102, and a transmitting antenna 103.

The radar transmission signal generator 101 generates a timing clock by multiplying the reference signal inputted from the reference signal generator 300 by a predetermined number and generates a radar transmission signal in accordance with the timing clock thus generated. Then, the radar transmission signal generator 101 repeatedly outputs the radar transmission signal with a predetermined radar transmission period ($T_r$). A radar transmission signal r(n,M) is expressed as r(n,M) = I(k,M) + jQ(k,M). Note here that j denotes the imaginary unit, k denotes discrete time, and M denotes the order of a radar transmission period.

The radar transmission signal generator 101 includes a code generator 104, a modulator 105, and an LPF (low-pass filter) 106.

The code generator 104 generates a code $a_n$ (n = 1, ..., L), i.e. a pulse-compression code, of a code sequence of a code length L every radar transmission period $T_r$. Examples of the code sequence include an M sequence code, a Barker code sequence, a complementary (Golay) code sequence, a Spano code sequence, and the like.

For example, in a case where the code sequence is a complementary code sequence, the code generator 104 generates codes $P_n$ and $Q_n$ (which correspond to $a_n$ and $b_n$, respectively, shown in Fig. 1) that are alternately paired every radar transmission period. That is, in the Mth radar transmission period (expressed as $T_r$[M]), the code generator 104 outputs one of the pair of complementary codes, i.e. the code $P_n$, as a code to the modulator 105, and in the (M+1)th radar transmission period (expressed as $T_r$[M+1]) that follows, the code generator 104 outputs the other of the pair of complementary codes, i.e. the code $Q_n$, as a code to the modulator 105. Similarly, in the (M+2)th radar transmission period or later, the code generator 104 repeatedly generates the codes $P_n$ and $Q_n$ and outputs them to the modulator 105 with the two, i.e. Mth and (M+1)th, radar transmissions as a single unit.

The modulator 105 performs pulse modulation (e.g. amplitude modulation ASK (amplitude shift keying) or phase modulation (phase shift keying)) on the code $a_n$ inputted from the code generator 104 and outputs a modulated signal to the LPF 106.

The LPF 106 outputs a signal component of the modulated signal inputted from the modulator 105 that is below a predetermined limited bandwidth to the radio transmitter 102 as a baseband radar transmission signal.

The radio transmitter 102 generates a carrier-frequency (radio-frequency: RF) radar transmission signal by performing a frequency conversion on the baseband radar transmission signal outputted from the LFP 106, amplifies the radar transmission signal to a predetermined transmission power P [dB] with a transmission amplifier, and outputs the radar transmission signal to the transmitting antenna 103. Then, the transmitting antenna 103 emits, into a space, the radar transmission signal inputted from the radio transmitter 102.

Fig. 4 shows an example of a radar transmission signal that is transmitted from the radar transmitter 100. The radar transmission signal includes a pulse code sequence of a code length L in a code transmission section $T_w$. In the code transmission section $T_w$ of each radar transmission period $T_r$, a pulse code sequence is transmitted. The remaining section ($T_r$-$T_w$) of each radar transmission period $T_r$ is a no-signal section. By pulse modulation being performed with $N_o$ samples per pulse code ($a_n$), the radar transmission signal includes $N_r$ (= $N_o \times L$) samples of signals in each code transmission section $T_w$. That is, the rate of sampling in the modulator 105 is ($N_o \times L$)/$T_w$. Further, the radar transmission signal includes $N_u$ samples in the no-signal section ($T_r$-$T_w$).

It should be noted that the radar transmitter 100 may include a radar transmission signal generator 101a shown in Fig. 5 instead of including the radar transmission signal generator 101. Fig. 5 shows a modification of a radar transmission signal generator. The radar transmission signal generator 101a includes a DA converter 107 and a code storage 108 instead of including the code generator 104, the modulator 105, and the LPF 106 shown in Fig. 3. In the radar transmission signal generator 101a shown in Fig. 5, the code storage 108 stores code sequences generated in advance and sequentially and cyclically reads out the stored code sequences, and the DA converter 107 coverts an output (digital signal) from the code storage 108 into an analog baseband signal.

Configuration of Radar Receiver 200

Next, a configuration of the radar receiver 200 is described. As show in Fig. 3, the radar receiver 200 includes a receiving antenna 201, a radio receiver 202, and a signal processor 203.

The receiving antenna 201 receives a reflected wave signal reflected by a target and outputs the reflected wave signal thus received to the radio receiver 202.

The radio receiver 202 includes an amplifier 204, a frequency converter 205, and a quadrature-phase detector 206. The radio receiver 202 receives the reference signal from the reference signal generator 300, which will be described later, generates a timing clock by multiplying the reference signal by a predetermined number, and operates in accordance with the timing clock thus generated. Specifically, the amplifier 204 amplifies the received signal received by the receiving antenna 201 to a predetermined level, the frequency converter 205 converts the frequency of the received signal from a radio frequency band into a baseband, and the quadrature-phase detector 206 converts the baseband received signal into a baseband received signal including an I signal (in-phase signal) and a Q signal (quadrature-phase signal) and outputs it to the signal processor 203.

The signal processor 203 includes an AD converters (samplers) 207 and 208, a correlation calculator 209, a first adder 210, a second adder 211, a first Doppler frequency analyzer 212, a second Doppler frequency analyzer 213, a Doppler frequency corrector 214, and a positioning result outputter 215.

The AD converter 207 receives the I signal from the quadrature-phase detector 206. The AD converter 208 receives the Q signal from the quadrature-phase detector 206. The AD converter 207 takes discrete-time samples of the baseband signal including the I signal and thereby converts the I signal into digital data. The AD converter 208 takes discrete-time samples of the baseband signal including the Q signal and thereby converts the Q signal into digital data.

Note here that each of the AD converts 207 and 208 takes $N_s$ discrete samples for the duration $T_p$ (= $T_w$/L) of each subpulse of a radar transmission signal. That is, the oversampling number per subpulse is $N_s$.

In the following description, with use of an I signal Ir(k,M) and a Q signal Qr(k,M), a baseband received signal that is outputted from the AD converters 207 and 208 at discrete time k in the Mth radar transmission period $T_r[M]$ is expressed as a complex signal x(k,M) = Ir(k,M) + jQr(k,M), where j is the imaginary unit. Further, in the following, one complete cycle of discrete time k has its basis (k = 1) at the timing of the start of a radar transmission period ($T_r$) and lasts until a sample point k = $(N_r+N_u)N_s/N_o$ preceding the end of the radar transmission period $T_r$. That is, k = 1, ..., $(N_r+N_u)N_s/N_o$.

For each radar transmission period $T_r$, the correlation calculator 209 performs a sliding correlation calculation between a discrete sample value x(k,M) including the discrete sample values Ir(k,M) and Qr(k,M) inputted from the AD converters 207 and 208 and the pulse-compression code $a_n$ (n = 1, ..., L) transmitted by the radar transmitter 100. For example, the correlation calculation value AC(k,M) of a sliding correlation calculation at discrete time k in the Mth radar transmission period $T_r[M]$ is calculated according to mathematical expression (3):

$$AC(k,M) = \sum_{n=1}^{L} x(k + N_s(n-1), M)a_n^* \quad (3)$$

where the asterisk denotes a complex conjugate operator.

The correlation calculator 209 performs correlation calculations according to mathematical expression (3), for example, over the duration of k = 1, .... $\{N_r+N_u)N_s/N_o$.

It should be noted that the correlation calculator 209 is not limited to the case of performing correlation calculations over the duration of k = 1, ..., $\{N_r+N_u)N_s/N_o$, but may limit a measuring range (i.e. the range of k) according to the range of presence of a target to be measured by the radar apparatus 10. This allows the correlation calculator 209 to reduce the amount of arithmetic processing.

Specifically, for example, the correlation calculator 209 may limit the measuring range to k = $N_s(L+1)$, ..., $(N_r+N_u)N_s/N_o-N_sL$. In Fig. 6, the radar apparatus 10 does not perform measurements in time sections corresponding to transmission sections $T_w$. Fig. 6 explains radar transmission signal timings and measuring ranges. With this, in such a case where a radar transmission signal sneaks directly to the radar receiver 200, the radar apparatus 10 can perform measurements to the exclusion of the influence of sneaking, as the correlation calculator 209 does not execute processing during a period in which the radar transmission signal sneaks (i.e. a period of at least less than $\tau 1$).

Further, in a case where the measuring range (range of k) is limited, the radar apparatus 10 may apply processing in a similarly limited measuring range (range of k) to processes in the first adder 210, the second adder 211, the first Doppler frequency analyzer 212, the second Doppler frequency analyzer 213, and the Doppler frequency corrector 214, which will be described below. This makes it possible to reduce the amount of processing in each component, allowing the radar receiver 200 to consume less electricity.

The first adder 210 performs addition as many times as a first number of additions $N_{p1}$ with the correlation calculation values AC(k,M), which are outputs from the correlation calculator 209 obtained for each radar transmission period $T_r$ (i.e. for each discrete time k), as a single unit. In other words, the first adder 210 performs addition according to mathematical expression (4) over the duration ($T_r \times N_{p1}$) of as many radar transmission periods $T_r$ as the first number of additions $N_{p1}$, Note here that $N_{p1}$ is an integer value of 2 or greater.

$$CI_1(k,m) = \sum_{g=1}^{N_{p1}} AC(k, N_{p1}(m-1)+g) \quad (4)$$

That is, with $AC(k,N_{p1}(m-1)+1)$ to $AC(k,N_{p1}\times m)$ as a single unit, the mth first adder 210 with respect to discrete time k performs addition at uniform timings of discrete time k and outputs as many results of addition as the number of additions $N_{p1}$ as the mth adder output $CI_1(k,m)$ with respect to discrete time k. Note here that m is an integer of greater than 0.

The second adder 211 performs addition as many times as a second number of additions $N_{p2}$ that is smaller than the first number of additions $N_{p1}$ with the correlation calculation values AC(k,M), which are outputs from the correlation calculator 209 obtained for each radar transmission period $T_r$ (i.e. for each discrete time k), as a single unit. In other words, the second adder 211 performs addition according to mathematical expression (5) below over the duration ($T_r \times N_{p2}$) of as many radar transmission periods $T_r$ as the second number of additions $N_{p2}$. It should be noted that $N_{p2}$ is an integer value of not less than 2 that is smaller than $N_{p1}$. For example, the settings may be configured such that $N_{p2} = N_{p1}/2$.

$$CI_2(k,m) = \sum_{g=1}^{N_{p2}} AC(k, N_{p1}(m-1)+g) \quad (5)$$

That is, with $AC(k,N_{p1}(m-1)+1)$ to $AC(k,N_{p1}\times m)$ as a single unit, the second adder 211 performs addition at uniform timings of discrete time k and outputs as many results of addition as the number of additions $N_{p2}$ as the mth adder output $CI_2(k,m)$ with respect to discrete time k. Note here that m is an integer of greater than 0.

Fig. 7 shows a relationship between radar transmission periods $T_r$ during which $N_{p1} = 16$ and $N_{p2} = 8$ and sections of addition in the first and second adders 210 and 211. In Fig. 7, the first adder 210 adds outputs from the correlation calculator 209 for radar transmission periods #1 to #16. Meanwhile, the second adder 211 adds the outputs #1 to #8 of the outputs from the correlation calculator 209 for the radar transmission periods #1 to #16. Furthermore, the first adder 210 adds outputs from the correlation calculator 209 for radar transmission periods #17 to #32. Meanwhile, the second adder 211 adds the outputs from the correlation calculator for #17 to #24 of the outputs from the correlation calculator 209 for the radar transmission periods #17 to #32. The same applies to the subsequent transmission periods.

The first Doppler frequency analyzer 212 performs addition after correcting a phase variation $\Phi(f_s) = 2\pi f_s(T_r \times N_{p1})\Delta\Phi$ depending on $2N_f$ different Doppler frequencies $f_s\Delta\Phi$ according to mathematical expression (6) below at uniform timings of discrete time k with $CI_1(k,N_c(w-1)+1)$ to $CI_1k,N_c\times w)$, which are $N_c$ outputs from the first adder 210 obtained for each discrete time k, as a unit.

$$\begin{aligned} FT_CI_1(k,f_s,w) &= \sum_{q=0}^{N_c-1} CI_1(k,N_c(w-1)+q+1)\exp[-j\phi(f_s)q] \\ &= \sum_{q=0}^{N_c-1} CI_1(k,N_c(w-1)+q+1)\exp[-j2\pi f_s T_r N_{p1} q\Delta\phi] \end{aligned} \quad (6)$$

In mathematical expression (6), $FT_CI_1(k,f_s,w)$ is the wth output from the first Doppler frequency analyzer 212 and a result of Doppler frequency analysis of a reflected wave received at discrete time k. It should be noted that, in mathematical expression (6), $f_s = -N_f + 1, ..., 0, ..., N_f$, $k = 1, ..., (N_r+N_u)N_s/N_o$, w is an integer of greater than 0, and $\Delta\Phi$ is the phase rotation unit. Further, j is the imaginary unit.

According to mathematical expression (6), the first Doppler frequency analyzer 212 can yield

$FT_CI_1(k,-N_f+1,w)$, ..., $FT_CI_1(k,N_f-1.w)$, which are results of addition according to $2N_f$ Doppler frequency components for each discrete time k, for the duration ($T_r \times N_{p1} \times N_c$) of a number $N_{p1} \times N_c$ of radar transmission periods $T_r$.

It should be noted that in a case where, in mathematical expression (6), $\Delta\Phi = 1/(T_r \times N_{p1} \times N_c)$ and $N_f = N_c/2$, the first Doppler frequency analyzer 212 is equivalent to performing a discrete Fourier transform at a sampling frequency $f_{ds} = 1/T_{ds}$ at sampling intervals $T_{ds} = (T_r \times N_{p1})$ with respect to an output from the first adder 210 as expressed in mathematical expression (7) below. Furthermore, the first Doppler frequency analyzer 212 can apply FFT processing by setting $N_c$ to a binary exponential number, thus making it possible to greatly reduce the amount of arithmetic processing.

$$FT_CI_1(k,f_s,w) = \sum_{q=0}^{N_c-1} CI_1(k, N_c(w-1)+q+1)\exp[-j\frac{2\pi}{N_c} f_s q] \quad (7)$$

As with the first Doppler frequency analyzer 212, the second Doppler frequency analyzer 213 performs addition after correcting a phase variation $\Phi(f_s)=2\pi f_s(T_r \times N_{p1})\Delta\Phi$ depending on $2N_f$ different Doppler frequencies $f_s\Delta\Phi$ according to mathematical expression (8) below at uniform timings of discrete time k with $CI_2(k,N_c(w-1)+1)$ to $CI_2(k,N,\times w)$, which are $N_c$ outputs from the second adder 211 obtained for each discrete time k, as a unit.

$$\begin{aligned} FT_CI_2(k,f_s,w) &= \sum_{q=0}^{N_c-1} CI_2(k, N_c(w-1)+q+1)\exp[-j\phi(f_s)q] \\ &= \sum_{q=0}^{N_c-1} CI_2(k, N_c(w-1)+q+1)\exp[-j2\pi f_s T_r N_{p1} q\Delta\phi] \end{aligned} \quad (8)$$

In mathematical expression (8), $FT_CI_2(k,f_s,w)$ is the wth output from the second Doppler frequency analyzer 213 and a result of Doppler frequency analysis of a reflected wave received at discrete time k. It should be noted that, as in mathematical expression (6), $f_s = -N_f+1, ..., 0, ..., N_f$, $k = 1, ..., (N_r+N_u)N_s/N_o$, w is an integer of greater than 0, and $\Delta\Phi$ is the phase rotation unit. Further, j is the imaginary unit.

According to mathematical expression (8), the second Doppler frequency analyzer 213 can yield $FT_CI_2(k,-N_f+1,w)$, ..., $FT_CI_2(k,N_f-1,w)$, which are results of addition according to $2N_f$ Doppler frequency components for each discrete time k, for the duration ($T_r \times N_{p1} \times N_c$) of a number $N_{p1} \times N_c$ of radar transmission periods $T_r$.

As in mathematical expressions (6) and (7), in a case where, in mathematical expression (8), $\Delta\Phi = 1/(T_r \times N_{p1} \times N_c)$ and $N_f = N_c/2$, the second Doppler frequency analyzer 213 is equivalent to performing a discrete Fourier transform at a sampling frequency $f_{ds} = 1/T_{ds}$ at sampling intervals $T_{ds} = (T_r \times N_{p1})$ with respect to an output from the second adder 211 as expressed in mathematical expression (9) below. Furthermore, the second Doppler frequency analyzer 213 can apply FFT processing by setting $N_c$ to a binary exponential number, thus making it possible to greatly reduce the amount of arithmetic processing.

$$FT_CI_2(k,f_s,w) = \sum_{q=0}^{N_c-1} CI_2(k, N_c(w-1)+q+1)\exp[-j\frac{2\pi}{N_c} f_s q] \quad (9)$$

It should be noted that, in the radar apparatus 10, the first Doppler frequency analyzer 212 and the second Doppler frequency analyzer 213 may perform Fourier analyses after the application of window functions to the outputs from the first and second adders 210 and 211. In this case, the radar apparatus 10 can suppress frequency side lobes in the Doppler frequency analyses in the first and second Doppler frequency analyzers 212 and 213, thus making it possible to enhance the capability of separating Doppler frequencies.

Incidentally, in a case where the outputs from the first and second adders 210 and 211 include Doppler frequency components exceeding $f_{ds}/2$, the radar apparatus 10 becomes unable to satisfy the sampling theorem. This may cause an occurrence of frequency folding in the results of the frequency analyses in the first and second Doppler frequency analyzers 212 and 213.

As mentioned above, in a case where $\Delta\Phi = 1/(T_r \times N_{p1} \times N_c)$ and $N_f = N_c/2$ for reductions in amount of arithmetic processing in the first and second Doppler frequency analyzers 212 and 213, the phase variation $\Phi(f_s)$ depending on the Doppler frequency $f_s\Delta\Phi$ is $\Phi(f_s) = 2\pi f_s(T_r \times N_{p1})\Delta\Phi = 2\pi f_s/N_c$. In this case, the Doppler frequency index $f_s$ takes on an integer value that falls within the range of $-N_c/2+1$ to $N_c/2$. Therefore, in a case where input signals to the first and second Doppler frequency analyzers 212 and 213 include, in the duration ($T_r \times N_{p1}$), Doppler frequency components that constitute phase rotations whose amounts of phase rotation take on absolute values exceeding $\pi$, the radar apparatus 10 may generate frequency folding components in Fourier transform processing in the first and second Doppler frequency analyzers 212 and 213.

Fig. 8 shows a relationship between a component of Doppler frequency $f_d$ that is inputted to a Doppler frequency analyzer and a detected peak Doppler frequency. It should be noted that the horizontal axis of Fig. 8 represents the amount of phase rotation during the $N_{p1}$ period $[2\pi(T_r \times N_{p1}) \times f_d]$, where $f_d$ is the Doppler frequency. In Fig. 8, since the Doppler frequency component exceeds $f_{ds}/2$ in the case of a phase rotation whose amount of phase rotation during the $N_{p1}$ period takes on an absolute value exceeding $\pi$, the radar apparatus 10 may cause an occurrence of frequency folding.

Accordingly, in the radar apparatus 10 according to the embodiment of the present disclosure, the Doppler frequency corrector 214 determines the presence or absence of a Doppler frequency folding and corrects the Doppler frequency folding.

As mentioned above, while the first adder 210 and the second adder 211 add the outputs from the correlation calculator 209, the first adder 210 and the second adder 211 differ in number of additions from each other. Accordingly, the first adder 210 and the second adder 211 differ in output value from each other; that is, input signals to the first and second adders 210 and 211 differ in amplitude-phase response to the Doppler frequency component from each other.

Further, the first Doppler frequency analyzer 212 and the second Doppler frequency analyzer 213 perform discrete Fourier transforms at a sampling frequency $f_{ds} = 1/T_{ds}$ at identical sampling intervals $T_{ds} = (T_r \times N_{p1})$ on the outputs from the first and second adders 210 and 211. In this processing, since the sampling numbers, too, are identical ($N_c$), the first Doppler frequency analyzer 212 and the second Doppler frequency analyzer 213 output the same frequency analysis results in a case where the inputs signals are equal. However, since the first Doppler frequency analyzer 212 executes processing on the basis of the outputs from the first adder 210 and the second Doppler frequency analyzer 213 executes processing on the basis of the outputs from the second adder 211, these results are different.

Therefore, outputs from the first and second Doppler frequency analyzers 212 and 213 are outputs reflecting amplitude-phase responses to the Doppler frequency component of the input signals to the first and second adders 210 and 211.

Figs. 9A and 9B show the characteristics of amplitude-phase responses to a Doppler frequency component that is inputted to the first and second adders 210 and 211 in a case where $N_{p1} = 32$ and $N_{p2} = 16$. In each of Figs. 9A and 9B, the horizontal axis represents the normalized Doppler frequency, and the amount of phase rotation during the $N_{p1}$ period is expressed as $\psi(f_d) = [2\pi(T_r \times N_{p1}) \times f_d]$. In Fig. 9A, the vertical axis represents the amplitude output [dB]. In Fig. 9B, the vertical axis represents the phase output (i.e. the phase difference based on the phase of the first adder 210) [rad].

It should be noted that the amplitude output shown in Fig. 9A is calculated according to mathematical expressions (10) to (13) below.

First, when $N_{p1} = 32$, the amplitude output is defined as:

$$20\log_{10}(|AOUT_1(f_d)|) \quad [dB] \tag{10}$$

where

$$AOUT_1(f_d) = \sum_{g=1}^{N_{p1}} \exp(j\psi(f_d)(g-1)/N_{p1}) \tag{11}$$

Meanwhile, when $N_{p2} = 16$, the amplitude output is defined as:

$$20\log_{10}(|AOUT_2(f_d)|) \quad [dB] \tag{12}$$

where

$$AOUT_2(f_d) = \sum_{g=1}^{N_{p2}} \exp(j\psi(f_d)(g-1)/N_{p1}) \tag{13}$$

Further, the phase output shown in Fig. 9B is calculated according to mathematical expression (14):

$$angle(AOUT_1(f_d)/AOUT_2(f_d)) \quad [rad] \qquad (14)$$

Fig. 9A shows the amplitude output from the first adder 210 and the amplitude output from the second adder 211. Since the first adder 210 is larger in number of additions than the second adder 211, the amplitude response from the first adder 210 is twice (6 dB) as great as the amplitude response from the second adder 211 in a case where the Doppler frequency is zero (i.e. in a case where the amount of phase rotation during the $N_{p1}$ period is 0 [rad]) as shown in Fig. 9A.

It should be noted that, according to mathematical expression (11), in a case where the Doppler frequency is 0, the amplitude response from the first adder 210 is $AOUT_1(0) = N_{p1}$ and the amplitude response from the second adder 211 is $AOUT_2(0) = N_{p2}$. Therefore, from mathematical expressions (10) and (13) and inequality $N_{p1} > Np_2$, the amplitude response from the first adder 210 yields an output that is greater by 20 $\log_{10}$ $(N_{p1}/N_{p2})$ [dB] than that which is yielded by the amplitude response from the second adder 211.

For example, in Figs. 9A and 9B, where $N_{p1} = 32$ and $N_{p2} = 16$, $20 \log_{10} (32/16) = 20 \log_{10} (2) = 6$ [dB]; therefore, the amplitude response from the first adder 210 is twice (6 dB) as great as the amplitude response from the second adder 211.

Meanwhile, when the Doppler frequency becomes higher, the amplitude response from the first adder 210 causes phases to cancel each other out, as the first adder 210 is larger in number of additions. For example, in a case where $N_{p1}/N_{p2} = 2$, the amplitude response $AOUT_1(fd)$ from the first adder 210 becomes the amplitude value of the vector sum of the amplitude response $AOUT_2(fd)$ from the second adder 211 and $AOUT_2(fd)\exp[j\psi(fd)/2]$ obtained by imparting the phase rotation $\exp[j\psi(fd)/2]$ to the amplitude response $AOUT_2(fd)$ as shown in mathematical expression (15):

$$\begin{aligned}|AOUT_1(f_d)| &= \left|\sum_{g=1}^{N_{p1}} \exp(j\psi(f_d)(g-1)/N_{p1})\right| \\ &= \left|\sum_{g=1}^{N_{p2}} \exp(j\psi(f_d)(g-1)/N_{p1}) + \sum_{g=N_{p2}+1}^{N_{p1}} \exp(j\psi(f_d)(g-1)/N_{p1})\right| \\ &= |AOUT_2(f_d)\{1+\exp(j\psi(f_d)/2)\}| \end{aligned} \qquad (15)$$

For this reason, in the range of $-2\pi \leq \Psi(f_d) < -\pi$ or $\pi < \Psi(f_d) \leq 2\pi$, the amplitude response from the first adder 210 monotonically decreases with respect to the amplitude response from the second adder 211 and becomes smaller than $2^{0.5}$ (3 dB) as shown in mathematical expression (16):

$$0 = |1+\exp(j2\pi/2)| \leq |AOUT_1(f_d)/AOUT_2(f_d)| < |1+\exp(j\pi/2)| = \sqrt{2} \qquad (16)$$

Further, in Fig. 9B, there is a phase difference between the output from the first adder 210 and the output from the second adder 211 according to the Doppler frequency component $\Psi(f_d)$. In the range of $-\pi < \Psi(f_d) < \pi$ of the Doppler frequency component $\Psi(f_d)$ in which the Doppler component is not folded, the phase difference between the output from the first adder 210 and the output from the second adder 211 as calculated according to mathematical expression (14) falls within the range of not smaller than $-\pi/4$ to not larger than $\pi/4$ in a case where $N_{p1}/N_{p2} = 2$, as the relationship of mathematical expression (17) below is obtained in which the relationship of mathematical expression (16) is substituted.

$$angle(AOUT_1(f_d)/AOUT_2(f_d)) = angle\{1+\exp[j\psi(f_d)/2]\} \quad [rad] \qquad (17)$$

Meanwhile, in the rage of $-2\pi < \Psi(f_d) < -\pi$ or $\pi < \Psi(f_d) < 2\pi$ in which the Doppler component is folded, the phase difference between the output from the first adder 210 and the output from the second adder 211 as calculated according to mathematical expression (14) falls within the range of smaller than $-\pi/4$ or larger than $\pi/4$.

The Doppler frequency corrector 214 corrects the Doppler frequency folding component on the basis of such different output characteristics of amplitude or phase of the first and second adders 210 and 211. Specifically, the Doppler frequency corrector 214 selects the maximum peak Doppler frequency $f_{s_peak1}$ from among Doppler frequency responses for each discrete time k with respect to the wth output from the second Doppler frequency analyzer 213. Then, the Doppler frequency corrector 214 calculates the difference between the maximum peak Doppler frequency $f_{s_peak1}$ thus selected and the output response from the first Doppler frequency analyzer 212 according to mathematical expression (18) below. In a case where the difference is zero or larger, the Doppler frequency corrector 214 determines that there is no Doppler frequency folding. In a case where the calculation result from mathematical expression (18) is negative, the Doppler frequency corrector 214 determines that there is a Doppler frequency folding.

$$|FT_CI_1(k, f_{s_peak1}, w)|^2 - \alpha\,|FT_CI_2(k, f_{s_peak1}, w)|^2 \quad (18)$$

In mathematical expression (18), $\alpha$ is expressed by mathematical expression (19) below. In a case where $N_{p1}/N_{p2} = 2$, $\alpha$ is 2 as shown in mathematical expression (16).

$$\alpha = \frac{\left|\sum_{g=1}^{N_{p1}} \exp(j\pi(g-1)/N_{p1})\right|^2}{\left|\sum_{g=1}^{N_{p2}} \exp(j\pi(g-1)/N_{p1})\right|^2} \quad (19)$$

In a case where the Doppler frequency corrector 214 determines that there is no Doppler frequency folding, the Doppler frequency corrector 214 omits to correct $f_{s_peak1}$ and outputs the output from the first Doppler frequency analyzer 212 and the output from the second Doppler frequency analyzer 213 to the positioning result outputter 215. Meanwhile, in a case where the Doppler frequency corrector 214 determines that there is a Doppler frequency folding, the Doppler frequency corrector 214 outputs $f_{s_peak1} - f_{ds}$ as a true Doppler frequency when $f_{s_peak1} \geq 0$ or outputs $f_{s_peak1} + f_{ds}$ as a true Doppler frequency in a case where $f_{s_peak1} < 0$.

Alternatively, the Doppler frequency corrector 214 may determine the presence or absence of a folding in Doppler frequency by calculating the difference between the maximum peak Doppler frequency $f_{s_peak1}$ thus selected and the output response from the second adder 211 according to mathematical expression (20):

$$angle(FT_CI_1(k, f_{s_peak1}, w)FT_CI_2(k, f_{s_peak1}, w)^*) \quad (20)$$

In a case where the calculation result (difference) from mathematical expression (20) is not smaller than $-\pi/4$ and not larger than $\pi/4$, the Doppler frequency corrector 214 determines that there is no Doppler frequency folding, and in a case where the calculation result (difference) from mathematical expression (20) is smaller than $-\pi/4$ or larger than $\pi/4$, the Doppler frequency corrector 214 determines that there is a Doppler frequency folding. In a case where the Doppler frequency corrector 214 determines that there is no Doppler frequency folding, the Doppler frequency corrector 214 omits to correct $f_{s_peak1}$ and outputs the output from the first Doppler frequency analyzer 212 and the output from the second Doppler frequency analyzer 213 to the positioning result outputter 215.

Meanwhile, in a case where $f_{s_peak1} \geq 0$, the Doppler frequency corrector 214 outputs $f_{s_peak1} - f_{ds}$ as a true Doppler frequency to the positioning result outputter 215, or in a case where $f_{s_peak1} < 0$, the Doppler frequency corrector 214 outputs $f_{s_peak1} + f_{ds}$ as a true Doppler frequency to the positioning result outputter 215. Similarly, the Doppler frequency corrector 214 selects a predetermined number of peak Doppler frequencies $f_{s_peak}$ from among Doppler frequency responses for each discrete time k with respect to the wth output from the first Doppler frequency analyzer 212 and executes similar processing.

The positioning result outputter 215 outputs a result(s) of positioning of the target (such as the position of the target and/or the velocity of the target relative to the radar apparatus 10) with reference to the values of the outputs from the first and second Doppler frequency analyzers 212 and 213 or the values of the outputs corrected by the Doppler frequency corrector 214.

As described above, the radar apparatus 10 according to the embodiment of the present disclosure determines whether a folding occurs in a Doppler frequency included in a reflected wave from a target and, in a case where a folding occurs, can make a correction to the Doppler frequency. Since the number of types of radar transmission period is one, an increase in duration of transmission can be avoided. Further, the radar apparatus 10 according to the embodiment of the present disclosure eliminates the need for pairing of spectrum peaks in the first and second Doppler frequency analyzers 212 and 213.

The foregoing has described an embodiment according to an aspect of the present disclosure. The following describes a modification according to the present disclosure.

Modifications

The embodiment described above is configured such that the correlation calculator 209 outputs correlation values, that the first adder 210 and the second adder 211 add the correlation values with different numbers of additions to yield the respective results of addition, that the first Doppler frequency analyzer 212 and the second Doppler frequency analyzer 213 perform Doppler frequency analyses on the respective results of addition, and that a determination as to the presence or absence of a folding and a correction to the Doppler frequency are made according to the phase difference or amplitude difference between the results of the analyses. However, the numbers of adders and Doppler frequency analyzers may for example be three or larger instead of being two.

Figs. 10A and 10B each show an example of a configuration of a signal processor including three adders. In Figs. 10A and 10B, components which are identical to those of the embodiment described above are given the same reference numerals. Further, the data transmitter 100 and the configuration of the receiving antenna 203 and the radio receiver 202 in the data receiver 200 are identical to those shown in Fig. 3 and, as such, are not described below.

Fig. 10A is a diagram for explaining a signal processor 203a according to a first modification. As shown in Fig. 10A, the signal processor 203a includes a third adder 216 and an output level comparator and selector 217 in addition to the components of the embodiment described above.

As with the first and second adders 210 and 211, the third adder 216 performs addition as many times as a third number of additions $N_{p3}$ with the correlation calculation values AC(k,M), which are outputs from the correlation calculator 209 obtained for each radar transmission period $T_r$ (i.e. for each discrete time k), as a single unit. Note here that $N_{p3}$ is an integer value of not less than 2 that is smaller than $N_{p2}$.

That is, with $AC(k,N_{p1}(m-1)+1)$ to $AC(k,N_{p1}\times m)$ as a single unit, the third adder 216 performs addition at uniform timings of discrete time k and outputs as many results of addition as the third number of additions $N_{p3}$ as the mth adder output $CI_1(k,m)$ with respect to discrete time k. Note here that m is an integer of greater than 0.

The output level comparator and selector 217 selects two of the results of addition of the first to third adders 210, 211, and 216 in descending order of output level and outputs the results thus selected to the first and second Doppler frequency analyzers 212a and 213a and the Doppler frequency corrector 214.

In the modification shown in Fig. 10A, the first Doppler frequency analyzer 212a is not limited to the result of addition of the first adder 210 but performs a Doppler frequency analysis on the basis of that one of the results of addition of the first to third adders 210, 211, and 216 which is highest in output level. Moreover, the first Doppler frequency analyzer 212a is not limited to the result of addition of the first adder 210 but performs a Doppler frequency analysis on the basis of that one of the results of addition of the first to third adders 210, 211, and 216 which is second highest in output level.

The other components perform operations which are identical to those of the embodiment described above.

Fig. 10B is a diagram for explaining a signal processor 203b according to a second modification. As shown in Fig. 10B, the signal processor 203b includes a third adder 216 and a third Doppler frequency analyzer 218 in addition to the components of the embodiment described above.

In the second modification, as in the first modification, the third Doppler frequency analyzer 218 performs a Doppler frequency analysis on the basis of the result of addition of the third adder 216, which performs addition as many times as the third number of additions $N_{p3}$ with the correlation calculation values AC(k,M) as a single unit. Moreover, on the basis of the results of the analyses of the first to third Doppler frequency analyzers 212, 213, and 218, a Doppler frequency corrector 214b determines the presence or absence of a folding and makes a correction.

Fig. 11A shows amplitude responses obtained in a case where the first, second, and third adders 210, 211, and 216 perform addition as many times as $N_{p1}$ = 32, $N_{p2}$ = 16, and $N_{p3}$ = 8, respectively. Fig. 11B shows phase responses obtained in a case where the first, second, and third adders 210, 211, and 216 perform addition as many times as $N_{p1}$ = 32, $N_{p2}$ = 16, and $N_{p3}$ = 8, respectively. It should be noted that, unlike Fig. 9, Fig. 11 shows a case where the normalized Doppler frequency (amount of phase rotation) is positive.

As shown in Figs. 11A and 11B, the signal processor 203 determines the presence or absence of a folding and makes a correction in a wide range by using the output level comparator and selector 217 to adaptively switch among the results of addition of the first to third adders 210, 211, and 216, or the signal processor 203b determines the presence or absence of a folding and makes a correction in a wide range by using the Doppler frequency corrector 214b to combine the outputs from the first to third Doppler frequency analyzers 212, 213, and 218 based on the results of addition of the first to third adders 210, 211, and 216.

Specifically, whereas the radar apparatus 10 according to the embodiment described above can determine the presence or absence of a folding and make a correction in the range of $4\pi$ within which Doppler frequency components vary from $-2\pi$ to $2\pi$, the radar apparatus 10 according to the first or second modification can determine the presence or absence of a folding and make a correction in the range of $8\pi$ within which Doppler frequency components vary from $-4\pi$ to $4\pi$.

The foregoing has described the first and second modifications. It should be noted that a proper combination of the embodiment described above and an operation according to each modification may be implemented.

In the embodiment described above, no particular mention was made of the installation locations of the radar transmitter 100 and the radar receiver 200 of the components of the radar apparatus 10. However, the radar transmitter 100 and the radar receiver 200 may be placed adjacent to each other or be individually placed in physically separated places.

Although not illustrated, the radar apparatus 10 includes a storage medium such as a ROM (read-only memory) storing a control program and a work memory such as a RAM (random-access memory). In this case, the functions of the components described above are achieved by a CPU executing the control program.

In the foregoing, various embodiments have been described with reference to the drawings. However, the present disclosure is of course not limited to such examples. It is apparent that persons skilled in the art can conceive of various changes and alterations within the scope of claims, and such changes and alterations are naturally understood as pertaining to the technical scope of the present disclosure. Each constituent element in the embodiment described above may be arbitrarily combined with the other without departing from the spirit of the disclosure.

Although each of the embodiments described above has been described by giving an example where the present disclosure is configured with hardware, the present disclosure may alternatively be achieved with software in cooperation with hardware.

Further, the functional blocks used in the description of each of the embodiments above are typically achieved as LSIs, i.e. integrated circuits each having an input terminal and an output terminal. These LSIs may take the form of individual single chips or of a single chip including some or all of them. Depending on the degree of integration, the LSIs may alternatively be referred to as "ICs (integrated circuits)", "system LSIs", "super LSIs", or "ultra LSIs".

Further, the method for integrating circuits is not limited to LSI, but may be achieved with dedicated circuits or general-purpose processors. An FPGA (field programmable gate array) that can be programmed after manufacturing of an LSI or a reconfigurable processor that allows reconfiguration of the connection or setup of circuit cells inside the LSI may be utilized.

Furthermore, if an advance in semiconductor technology or a derivative technology gives rise to an integrated-circuit technology that replaces LSI, the technology may of course be employed to integrate the functional blocks. Possibilities include the application of biotechnology and the like.

## Summary of the Present Disclosure

A radar apparatus of the present disclosure includes: a radar transmitter, which in operation, repeatedly transmits a radar transmission signal every radar transmission period, the radar transmission signal including a plurality of pulse-compression codes; and a radar receiver, which in operation, receives a reflected wave signal which is the radar transmission signal being reflected by an object, wherein the radar receiver includes sampling circuitry, which in operation, performs discrete sampling on the reflected wave signal at discrete times based on the radar transmission period, correlation calculation circuitry, which in operation, calculates correlation values between results of the discrete sampling and the plurality of pulse-compression codes every radar transmission period, a plurality of adder circuitry, which in operation, that add the correlation values calculated every radar transmission period, numbers of additions being different for each of the plurality of adders, a plurality of Doppler frequency analysis circuitry, which in operation, each perform Doppler frequency analyze on the respective results of the additions by the plurality of adder circuitry through fast Fourier transforms, and Doppler frequency correction circuitry, which in operation, (i) determines whether or not a folding in a Doppler frequency included in the reflected wave signal is present according to an amplitude difference or phase difference between two of peak spectra of results of the analyses performed by the plurality of Doppler frequency analysis circuitry, and (ii) makes a correction to the Doppler frequency included in the reflected wave signal on the basis of the results of the analyses in a case it is determined that the folding is present.

In the radar apparatus of the present disclosure, the plurality of adder circuitry include a first adder circuitry that adds the correlation values calculated every radar transmission period, a number of additions for the first adder being a first number of additions, and a second adder circuitry that adds the correlation values calculated every radar transmission period, a number of additions for the second adder circuitry being a second number of additions that is smaller than the first number of additions, and the plurality of Doppler frequency analysis circuitry include a first Doppler frequency analysis circuitry that outputs a first analysis result obtained by performing a Doppler frequency analysis on a first result of addition of the first adder circuitry, and a second Doppler frequency analysis circuitry that outputs a second analysis result obtained by performing a Doppler frequency analysis on a second result of addition of the second adder circuitry.

In the radar apparatus of the present disclosure, the Doppler frequency correction circuitry selects a peak Doppler frequency each of the discrete times with respect to the second analysis result, and, in a case a phase difference or amplitude difference between the output of the second analysis result and the output of the first analysis result at the peak Doppler frequency thus selected is out of a determined range, determines that the folding in Doppler frequency is present.

In the radar apparatus of the present disclosure, the first Doppler frequency analysis circuitry performs a Doppler frequency analysis on the first result of addition through a discrete Fourier transform with use of a first sampling number, and the second Doppler frequency analysis circuitry performs a Doppler frequency analysis on the second result of addition through a discrete Fourier transform with use of a second sampling number.

The radar apparatus of the present disclosure includes an output level comparison circuitry and selection circuitry that selects a determined number of results of addition from among those of the results of addition of the plurality of adder circuitry which are high in output level, wherein the plurality of Doppler frequency analysis circuitry perform Doppler frequency analyses on the determined number of results of addition thus selected.

In the radar apparatus of the present disclosure, the plurality of Doppler frequency analysis circuitry perform Doppler frequency analyses on either of the plurality of results of addition inputted thereto, and with reference to the results of the analyses performed by the plurality of Doppler frequency analysis circuitry, the Doppler frequency correction circuitry determines whether or not the folding in Doppler frequency in the reflected wave signal is present and makes the correction.

A radar method includes: repeatedly transmitting a radar transmission signal every radar transmission period, the radar transmission signal including a plurality of pulse-compression codes; and receiving a reflected wave signal which is the radar transmission signal being reflected by an object, wherein the receiving includes performing discrete sampling on the reflected wave signal at discrete times based on the radar transmission period, calculating correlation values between results of the discrete sampling and the plurality of pulse-compression codes every radar transmission period, performing plurality of additions of the correlation values calculated every radar transmission period, numbers of additions being different for each of the plurality of additions of the correlation values, performing plurality of Doppler frequency analyses on the respective results of addition of the plurality of additions through fast Fourier transforms, determining whether or not a folding in Doppler frequency in the reflected wave signal is present according to an amplitude difference or phase difference between peak spectra of results of the plurality of Doppler frequency analyses, and making a correction to a Doppler frequency included in the reflected wave signal on the basis of the results of the analyses in a case it is determined that the folding is present.

The present disclosure is suitable as a radar apparatus and a radar method that detects the relative velocity of a target relative to a radar by detecting Doppler frequencies.

## Claims

**1.** A radar apparatus (10) comprising:

a radar transmitter (100) adapted to repeatedly transmit a radar transmission signal every radar transmission period, the radar transmission signal including a plurality of pulse-compression codes; and
a radar receiver (200) adapted to receive a reflected wave signal which is the radar transmission signal being reflected by an object,
wherein the radar receiver (200) includes
sampling circuitry (207, 208) adapted to perform discrete sampling on the reflected wave signal at discrete times based on the radar transmission period,
correlation calculation circuitry (209) adapted to calculate correlation values between results of the discrete sampling and the plurality of pulse-compression codes every radar transmission period,
a plurality of adders (210, 211) adapted to add the correlation values calculated every radar transmission period, the number of additions being different for each of the plurality of adders,
a plurality of Doppler frequency analyzers (212, 213), each of which is adapted to perform Doppler frequency analysis on the results of the additions by its respective adder (210, 211) through fast Fourier transforms, and
Doppler frequency correction circuitry (214) adapted to (i) determine whether or not a folding in a Doppler frequency included in the reflected wave signal is present based on an amplitude difference or phase difference between two of the peaks of the spectra of the results of the analyses performed by the plurality of Doppler frequency analyzers (212, 213), and (ii) make a correction to the Doppler frequency included in the reflected wave signal on the basis of the results of the analyses in case it is determined that the folding is present.

2. The radar apparatus according to Claim 1, wherein the plurality of adders includes a first adder (210) adapted to add the correlation values calculated every radar transmission period, a number of additions for the first adder being a first number of additions, and a second adder (211) adapted to add the correlation values calculated every radar transmission period, a number of additions for the second adder(212) being a second number of additions that is smaller than the first number of additions, and
the plurality of Doppler frequency analyzers (212, 213) includes a first Doppler frequency analyzer (212) adapted to output a first analysis result obtained by performing a Doppler frequency analysis on a first result of addition of the first adder (210), and a second Doppler frequency analyzer (213) adapted to output a second analysis result obtained by performing a Doppler frequency analysis on a second result of addition of the second adder (211).

3. The radar apparatus according to Claim 2, wherein the Doppler frequency correction circuitry (214) is adapted to select a peak Doppler frequency each of the discrete times with respect to the second analysis result, and, in a case a phase difference or amplitude difference between the output of the second analysis result and the output of the first analysis result at the peak Doppler frequency thus selected is out of a determined range, determines that the folding in Doppler frequency is present.

4. The radar apparatus according to Claim 2, wherein the first Doppler frequency analyzer (212) is adapted to perform a Doppler frequency analysis on the first result of addition through a discrete Fourier transform with use of a first sampling number, and
the second Doppler frequency analyzer is adapted to perform a Doppler frequency analysis on the second result of addition through a discrete Fourier transform with use of a second sampling number.

5. The radar apparatus according to Claim 1, comprising an output level comparison circuitry and selection circuitry adapted to select a determined number of results of addition from among those of the results of addition of the plurality of adders (210, 211) which are high in output level,
wherein the plurality of Doppler frequency analyzers (212, 213) is adapted to perform Doppler frequency analyses on the determined number of results of addition thus selected.

6. The radar apparatus according to Claim 1, wherein the plurality of Doppler frequency analyzers (212, 213) perform Doppler frequency analyses on either of the plurality of results of addition inputted thereto, and
with reference to the results of the analyses performed by the plurality of Doppler frequency analysers (212, 213), the Doppler frequency correction circuitry (214) is adapted to determine whether or not the folding in Doppler frequency in the reflected wave signal is present and make the correction.

7. A radar method comprising:

repeatedly transmitting a radar transmission signal every radar transmission period, the radar transmission signal including a plurality of pulse-compression codes; and
receiving a reflected wave signal which is the radar transmission signal being reflected by an object,
wherein the receiving includes
performing discrete sampling on the reflected wave signal at discrete times based on the radar transmission period,
calculating correlation values between results of the discrete sampling and the plurality of pulse-compression codes every radar transmission period,
performing plurality of additions of the correlation values calculated every radar transmission period, the number of additions being different for each of the plurality of additions of the correlation values,
performing plurality of Doppler frequency analyses on the respective results of addition of the plurality of additions through fast Fourier transforms,
determining whether or not a folding in Doppler frequency in the reflected wave signal is present according to an amplitude difference or phase difference between two of the peaks of the spectra of the results of the plurality of Doppler frequency analyses, and
making a correction to a Doppler frequency included in the reflected wave signal on the basis of the results of the analyses in a case it is determined that the folding is present.

**Patentansprüche**

1. Radarvorrichtung (10), umfassend:

einen Radarsender (100), der ausgebildet ist zum wiederholten Senden eines Radarsendesignals in jeder Radarsendeperiode, wobei das Radarsendesignal eine Vielzahl von Pulskompressionscodes enthält, und einen Radarempfänger (200), der ausgebildet ist zum Empfangen eines reflektierten Wellensignals, das das durch ein Objekt reflektierte Radarsendesignal ist,
wobei der Radarempfänger (200) enthält:

eine Abtastungsschaltung (207, 208), die ausgebildet ist zum Durchführen einer diskreten Abtastung auf dem reflektierten Wellensignal zu diskreten Zeiten basierend auf der Radarsendeperiode,
eine Korrelationsberechnungsschaltung (209), die ausgebildet ist zum Berechnen von Korrelationswerten zwischen Ergebnissen der diskreten Abtastung und der Vielzahl von Pulskompressionscodes in jeder Radarsendeperiode,
eine Vielzahl von Addierern (210, 211), die ausgebildet sind zum Addieren der in jeder Radarsendeperiode berechneten Korrelationswerte, wobei die Anzahl der Additionen für jeden aus der Vielzahl von Addierern verschieden ist,
eine Vielzahl von Dopplerfrequenzanalysierern (212, 213), die jeweils ausgebildet sind zum Durchführen einer Dopplerfrequenzanalyse auf den Additionsergebnissen des entsprechenden Addierers (210, 211) durch Fast-Fourier-Transformationen, und
eine Dopplerfrequenzkorrekturschaltung (214), die ausgebildet ist zum (i) Bestimmen, ob eine Faltung in einer in dem reflektierten Wellensignal enthaltenen Dopplerfrequenz vorhanden ist oder nicht, basierend auf einer Amplitudendifferenz oder einer Phasendifferenz zwischen zwei der Spitzen der Spektren der Ergebnisse der Analysen, die durch die Dopplerfrequenzanalysierer (212, 213) durchgeführt werden, und zum (ii) Vornehmen einer Korrektur an der in dem reflektierten Wellensignal enthaltenen Dopplerfrequenz basierend auf den Ergebnissen der Analysen, wenn bestimmt wird, dass die Faltung vorhanden ist.

**2.** Radarvorrichtung nach Anspruch 1, wobei die Vielzahl von Addierern einen ersten Addierer (210) enthält, der ausgebildet ist zum Addieren der in jeder Radarsendeperiode berechneten Korrelationswerte, wobei die Anzahl von Additionen für den ersten Addierer eine erste Anzahl von Additionen ist, und einen zweiten Addierer (211), der ausgebildet ist zum Addieren der in jeder Radarsendeperiode berechneten Korrelationswerte, wobei die Anzahl von Additionen für den zweiten Addierer (212) eine zweite Anzahl von Additionen ist, die kleiner ist als die erste Anzahl von Additionen, und
die Vielzahl von Dopplerfrequenzanalysierern (212, 213) einen ersten Dopplerfrequenzanalysierer (212) enthält, der ausgebildet ist zum Ausgeben eines ersten Analyseergebnisses, das durch das Durchführen einer Dopplerfrequenzanalyse auf einem ersten Additionsergebnis des ersten Addierers (210) erhalten wird, und einen zweiten Dopplerfrequenzanalysierer (213), der ausgebildet ist zum Ausgeben eines zweiten Analyseergebnisses, das durch das Durchführen einer Dopplerfrequenzanalyse auf einem zweiten Additionsergebnis des zweiten Addierers (211) erhalten wird.

**3.** Radarvorrichtung nach Anspruch 2, wobei die Dopplerfrequenzkorrekturschaltung (214) ausgebildet ist zum Auswählen einer Spitzendopplerfrequenz zu jeder der diskreten Zeiten in Bezug auf das zweite Analyseergebnis und, wenn eine Phasendifferenz oder eine Amplitudendifferenz zwischen der Ausgabe des zweiten Analyseergebnisses und der Ausgabe des ersten Analyseergebnisses an der derart ausgewählten Spitzendopplerfrequenz außerhalb eines vorbestimmten Bereichs liegt, bestimmt, dass die Faltung in der Dopplerfrequenz vorhanden ist.

**4.** Radarvorrichtung nach Anspruch 2, wobei der erste Dopplerfrequenzanalysierer (212) ausgebildet ist zum Durchführen einer Dopplerfrequenzanalyse auf dem ersten Additionsergebnis durch eine diskrete Fourier-Transformation unter Verwendung einer ersten Abtastungsanzahl, und
der zweite Dopplerfrequenzanalysierer ausgebildet ist zum Durchführen einer Dopplerfrequenzanalyse auf dem zweiten Additionsergebnis durch eine diskrete Fourier-Transformation unter Verwendung einer zweiten Abtastungsanzahl.

**5.** Radarvorrichtung nach Anspruch 1, die eine Ausgabepegelvergleichsschaltung und eine Auswahlschaltung umfasst, die ausgebildet sind zum Auswählen einer bestimmten Anzahl von Additionsergebnissen aus den Additionsergebnissen der Vielzahl von Addierern (210, 211), die einen hohen Ausgabepegel aufweisen,
wobei die Vielzahl von Dopplerfrequenzanalysierern (212, 213) ausgebildet sind zum Durchführen von Dopplerfrequenzanalysen auf der derart ausgewählten bestimmten Anzahl von Additionsergebnissen.

**6.** Radarvorrichtung nach Anspruch 1, wobei die Vielzahl von Dopplerfrequenzanalysierern (212, 213) Dopplerfrequenzanalysen auf einem aus der eingegebenen Vielzahl von Additionsergebnissen durchführen, und

mit Bezug auf die Ergebnisse der durch die Vielzahl von Dopplerfrequenzanalysierern (212, 213) durchgeführten Analysen die Dopplerfrequenzkorrekturschaltung (214) ausgebildet ist zum Bestimmen, ob die Faltung in der Dopplerfrequenz in dem reflektierten Wellensignal vorhanden ist oder nicht, und zum Vornehmen der Korrektur.

**7.** Radarverfahren, umfassend:

wiederholtes Senden eines Radarsendesignals in jeder Radarsendeperiode, wobei das Radarsendesignal eine Vielzahl von Pulskompressionscodes enthält, und
Empfangen eines reflektierten Wellensignals, das das durch ein Objekt reflektierte Radarsendesignal ist, wobei das Empfangen umfasst:

Durchführen einer diskreten Abtastung auf dem reflektierten Wellensignal zu diskreten Zeiten basierend auf der Radarsendeperiode,
Berechnen von Korrelationswerten zwischen Ergebnissen der diskreten Abtastung und der Vielzahl von Pulskompressionscodes in jeder Radarsendeperiode,
Durchführen einer Vielzahl von Additionen der in jeder Radarsendeperiode berechneten Korrelationswerte, wobei die Anzahl der Additionen für jeden aus der Vielzahl von Additionen der Korrelationswerte verschieden ist,
Durchführen einer Vielzahl von Dopplerfrequenzanalysen auf den entsprechenden Additionsergebnissen der Vielzahl von Additionen durch Fast-Fourier-Transformationen,
Bestimmen, ob eine Faltung in der Dopplerfrequenz in dem reflektierten Wellensignal vorhanden ist oder nicht, anhand einer Amplitudendifferenz oder Phasendifferenz zwischen zwei der Spitzen der Spektren der Ergebnisse der Vielzahl von Dopplerfrequenzanalysen, und Vornehmen einer Korrektur an einer in dem reflektierten Wellensignal enthaltenen Dopplerfrequenz basierend auf den Ergebnissen der Analysen, wenn bestimmt wird, dass die Faltung vorhanden ist.

## Revendications

**1.** Dispositif radar (10) comprenant :

un émetteur radar (100) adapté pour transmettre de manière répétée un signal de transmission radar pour chaque période de transmission radar, le signal de transmission radar incluant une pluralité de codes de compression d'impulsion ; et
un récepteur radar (200) adapté pour recevoir un signal ondulatoire réfléchi qui constitue le signal de transmission radar réfléchi par un objet,
dans lequel le récepteur radar (200) comprend
un circuit d'échantillonnage (207, 208) adapté pour appliquer un échantillonnage discret au signal ondulatoire réfléchi à des moments discrets selon la période de transmission radar,
un circuit de calcul de corrélation (209) adapté pour calculer des valeurs de corrélation entre des résultats de l'échantillonnage discret et la pluralité de codes de compression d'impulsion pour chaque période de transmission radar,
une pluralité d'additionneurs (210, 211) adapté pour additionner les valeurs de corrélation calculées pour chaque période de transmission radar, le nombre d'additions étant différent pour chacun de la pluralité d'additionneurs,
une pluralité d'analyseurs de fréquence Doppler (212, 213), donc chacun est adapté pour appliquer une analyse de fréquence Doppler aux résultats des additions par son additionneur respectif (210, 211) via des transformées de Fourier rapides, et
un circuit de correction de fréquence Doppler (214) adapté pour (i) déterminer si un repli dans une fréquence Doppler incluse dans le signal ondulatoire réfléchi est ou non présent selon une différence d'amplitude ou une différence de phase entre deux des crêtes du spectre des résultats des analyses effectuées par la pluralité d'analyseurs de fréquence Doppler (212, 213), et
(ii) appliquer une correction à la fréquence Doppler incluse dans le signal ondulatoire réfléchi selon les résultats des analyses au cas où il est déterminé que le repli est présent.

**2.** Le dispositif radar selon la revendication 1, dans lequel la pluralité d'additionneurs inclut un premier additionneur (210) adapté pour additionner les valeurs de corrélation calculées pour chaque période de transmission radar, un nombre d'additions pour le premier additionneur étant un premier nombre d'additions, et un deuxième additionneur (211) adapté pour additionner les valeurs de corrélation calculées pour chaque période de transmission radar, un nombre d'additions pour le deuxième additionneur (212) étant un deuxième nombre d'additions qui est plus petit que le premier nombre d'additions, et
la pluralité d'analyseurs de fréquence Doppler (212, 213) inclut un premier analyseur de fréquence Doppler (212) adapté pour générer en sortie un premier résultat d'analyse obtenu en appliquant une analyse de fréquence Doppler à un premier résultat d'addition du premier additionneur (210), et un deuxième analyseur de fréquence Doppler (213) adapté pour générer en sortie un deuxième résultat d'analyse obtenu en appliquant une analyse de fréquence Doppler à un deuxième résultat d'addition du deuxième additionneur (211).

**3.** Le dispositif radar selon la revendication 2, dans lequel le circuit de correction de fréquence Doppler (214) est adapté pour sélectionner une fréquence Doppler de crête à chacun des moments discrets par rapport au deuxième résultat d'analyse, et, au cas où une différence de phase ou une différence d'amplitude entre la sortie du deuxième résultat d'analyse et la sortie du premier résultat d'analyse à la fréquence Doppler de crête ainsi sélectionnée est hors d'une plage déterminée, détermine que le repli dans la fréquence Doppler est présent.

**4.** Le dispositif radar selon la revendication 2, dans lequel le premier analyseur de fréquence Doppler (212) est adapté pour appliquer une analyse de fréquence Doppler au premier résultat d'addition via une transformée de Fourier discrète en utilisant un premier nombre d'échantillonnages, et
le deuxième analyseur de fréquence Doppler est adapté pour appliquer une analyse de fréquence Doppler au deuxième résultat d'addition via une transformée de Fourier discrète en utilisant un deuxième nombre d'échantillonnages.

**5.** Le dispositif radar selon la revendication 1, comprenant un circuit de comparaison de niveau de sortie et un circuit de sélection adapté pour sélectionner un nombre déterminé de résultats d'addition parmi ceux des résultats d'addition de la pluralité d'additionneurs (210, 211) qui présentent un niveau de sortie élevé,
dans lequel la pluralité d'analyseurs de fréquence Doppler (212, 213) est adaptée pour appliquer des analyses de fréquence Doppler au nombre déterminé de résultats d'addition ainsi sélectionné.

**6.** Le dispositif radar selon la revendication 1, dans lequel la pluralité d'analyseurs de fréquence Doppler (212, 213) appliquent des analyses de fréquence Doppler à l'un ou l'autre de la pluralité de résultats d'addition entrée dans ceux-ci, et
selon les résultats des analyses effectuées par la pluralité d'analyseurs de fréquence Doppler (212, 213), le circuit de correction de fréquence Doppler (214) est adapté pour déterminer si le repli dans une fréquence Doppler dans le signal ondulatoire réfléchi est ou non présent et effectuer la correction.

**7.** Procédé radar comprenant :

une transmission de manière répétée d'un signal de transmission radar pour chaque période de transmission radar, le signal de transmission radar incluant une pluralité de codes de compression d'impulsion ; et
réception d'un signal ondulatoire réfléchi qui constitue le signal de transmission radar réfléchi par un objet, dans lequel la réception inclut
application d'un échantillonnage discret au signal ondulatoire réfléchi à des moments discrets selon la période de transmission radar,
calcul de valeurs de corrélation entre des résultats de l'échantillonnage discret et la pluralité de codes de compression d'impulsion pour chaque période de transmission radar,
exécution d'une pluralité d'additions des valeurs de corrélation calculées pour chaque période de transmission radar, le nombre d'additions étant différent pour chacune de la pluralité d'additions des valeurs de corrélation,
application d'une pluralité d'analyses de fréquence Doppler aux résultats respectifs d'addition de la pluralité d'additions via des transformées de Fourier rapide,
détermination si un repli dans une fréquence Doppler dans le signal ondulatoire réfléchi est ou non présent selon une différence d'amplitude ou une différence de phase entre deux des crêtes du spectre des résultats de la pluralité d'analyses de fréquence Doppler, et
application d'une correction à une fréquence Doppler incluse dans le signal ondulatoire réfléchi selon les résultats des analyses au cas où il est déterminé que le repli est présent.

FIG. 1

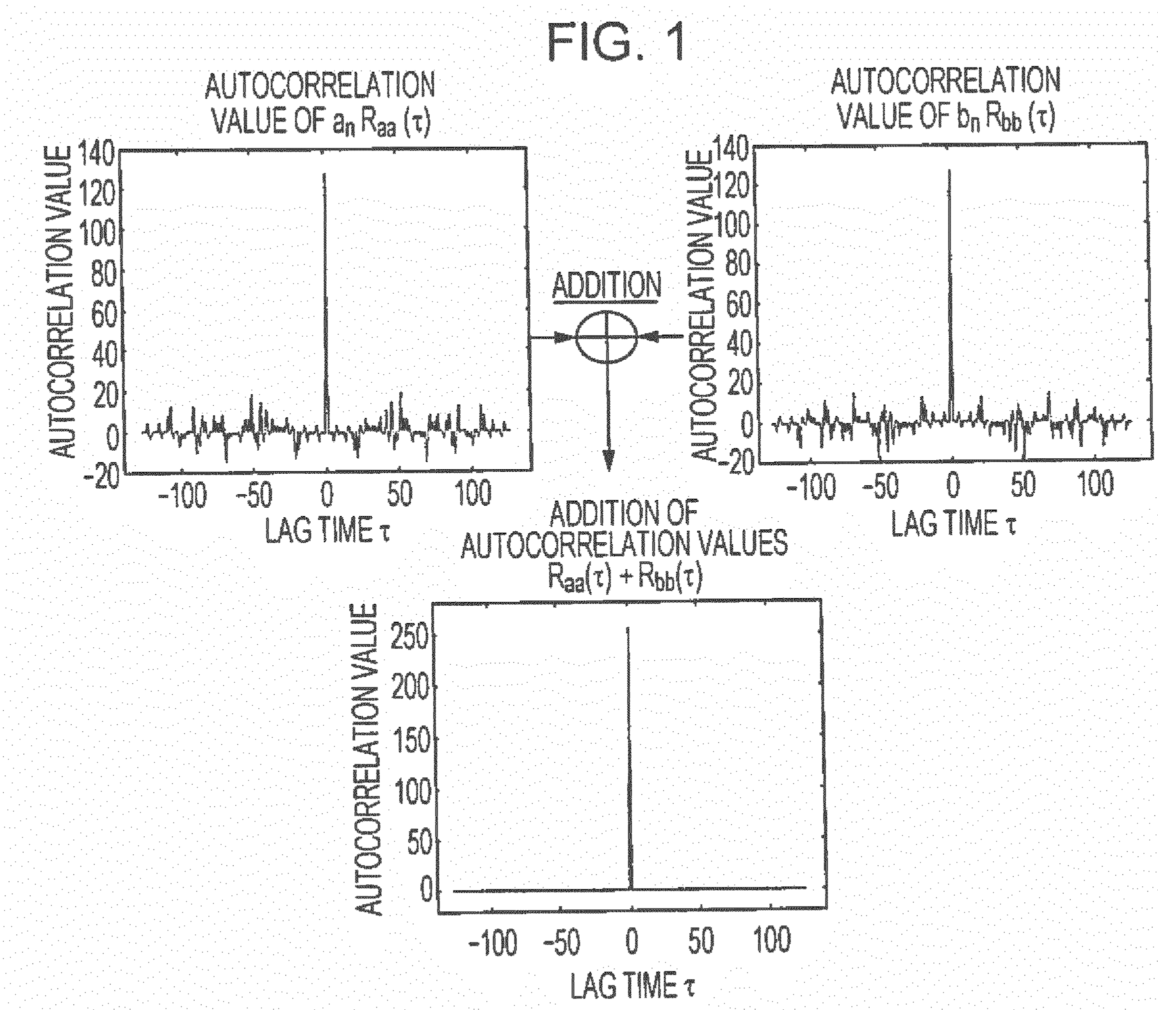
AUTOCORRELATION VALUE OF $a_n$ $R_{aa}(\tau)$
AUTOCORRELATION VALUE
140
120
100
80
60
40
20
0
-20
-100 -50 0 50 100
LAG TIME τ
ADDITION
AUTOCORRELATION VALUE OF $b_n$ $R_{bb}(\tau)$
AUTOCORRELATION VALUE
140
120
100
80
60
40
20
0
-20
-100 -50 0 50 100
LAG TIME τ
ADDITION OF AUTOCORRELATION VALUES
$R_{aa}(\tau) + R_{bb}(\tau)$
AUTOCORRELATION VALUE
250
200
150
100
50
0
-100 -50 0 50 100
LAG TIME τ

FIG. 2

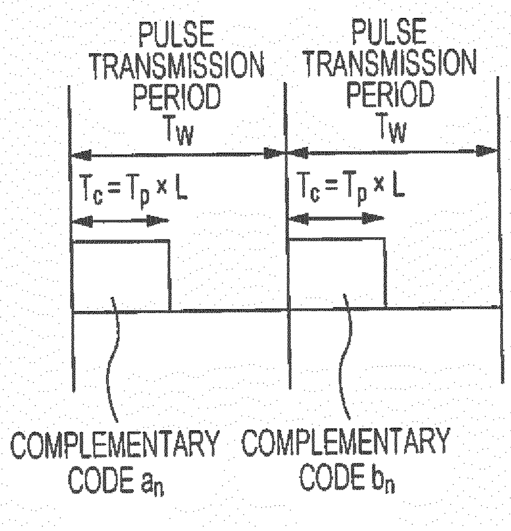
PULSE TRANSMISSION PERIOD $T_W$
PULSE TRANSMISSION PERIOD $T_W$
$T_c = T_p \times L$
$T_c = T_p \times L$
COMPLEMENTARY CODE $a_n$
COMPLEMENTARY CODE $b_n$

FIG. 3

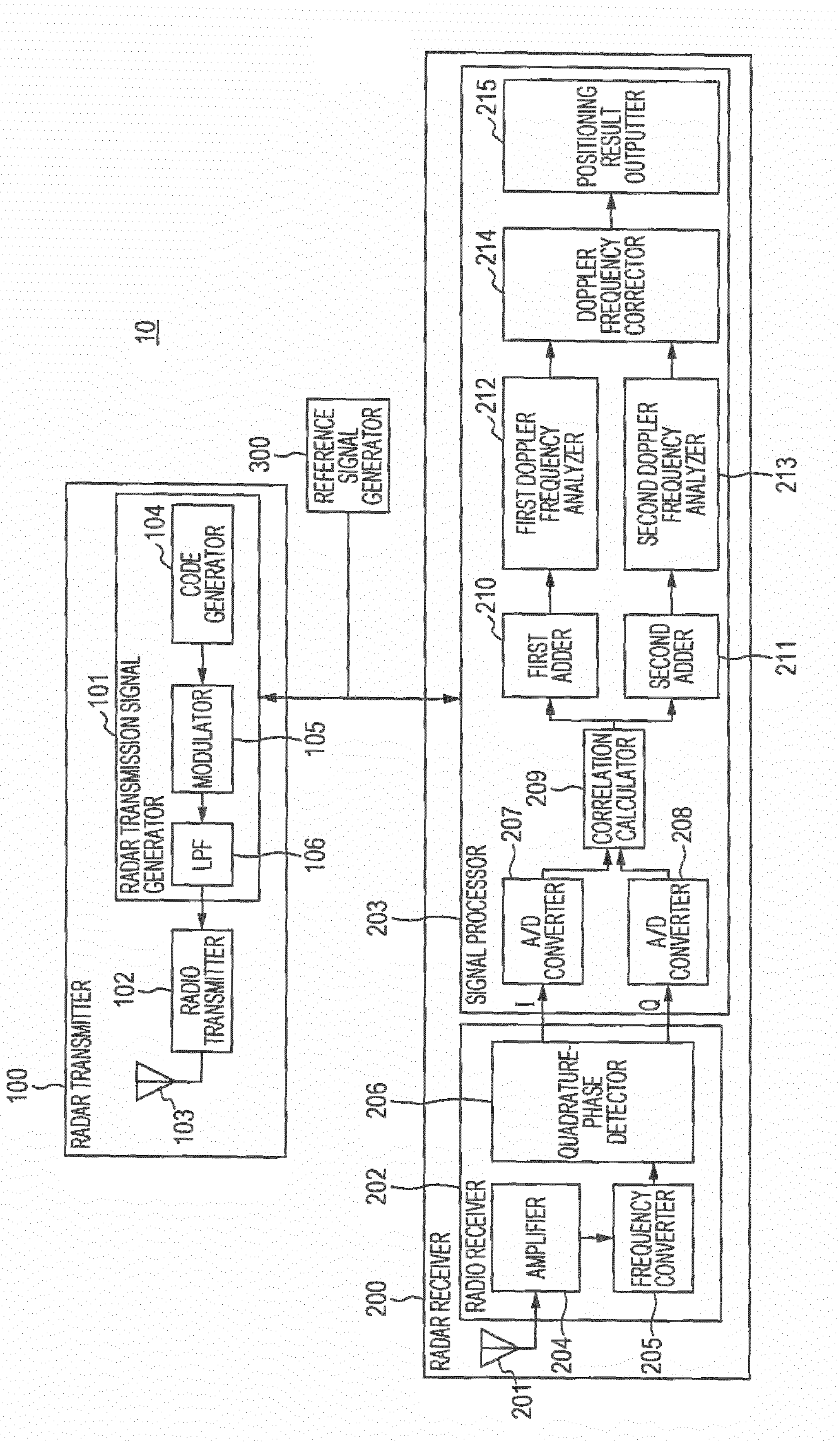
10
100
RADAR TRANSMITTER
101
RADAR TRANSMISSION SIGNAL GENERATOR
102
RADIO TRANSMITTER
103
104
CODE GENERATOR
105
MODULATOR
106
LPF
300
REFERENCE SIGNAL GENERATOR
200
RADAR RECEIVER
201
202
RADIO RECEIVER
203
SIGNAL PROCESSOR
204
AMPLIFIER
205
FREQUENCY CONVERTER
206
QUADRATURE-PHASE DETECTOR
I
Q
207
A/D CONVERTER
208
A/D CONVERTER
209
CORRELATION CALCULATOR
210
FIRST ADDER
211
SECOND ADDER
212
FIRST DOPPLER FREQUENCY ANALYZER
213
SECOND DOPPLER FREQUENCY ANALYZER
214
DOPPLER FREQUENCY CORRECTOR
215
POSITIONING RESULT OUTPUTTER

FIG. 4

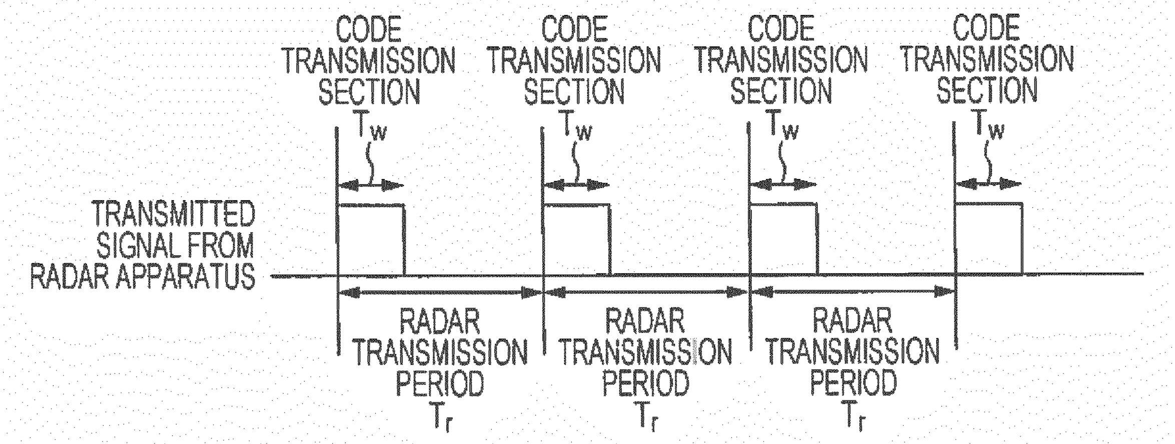
CODE
TRANSMISSION
SECTION
$T_w$
TRANSMITTED
SIGNAL FROM
RADAR APPARATUS
RADAR
TRANSMISSION
PERIOD
$T_r$

FIG. 5

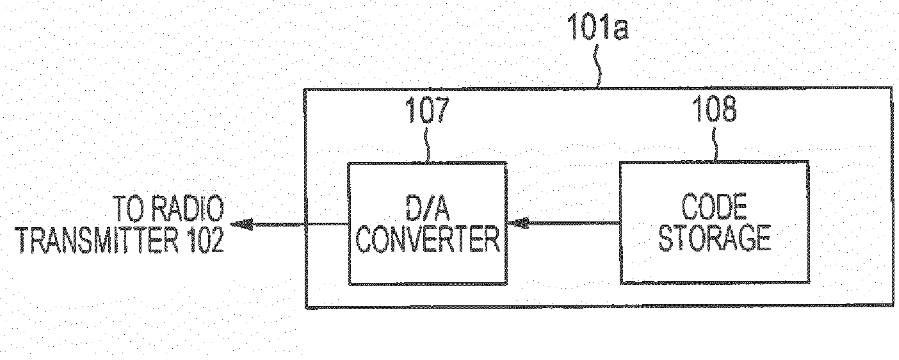
101a
107
108
TO RADIO
TRANSMITTER 102
D/A
CONVERTER
CODE
STORAGE

FIG. 6

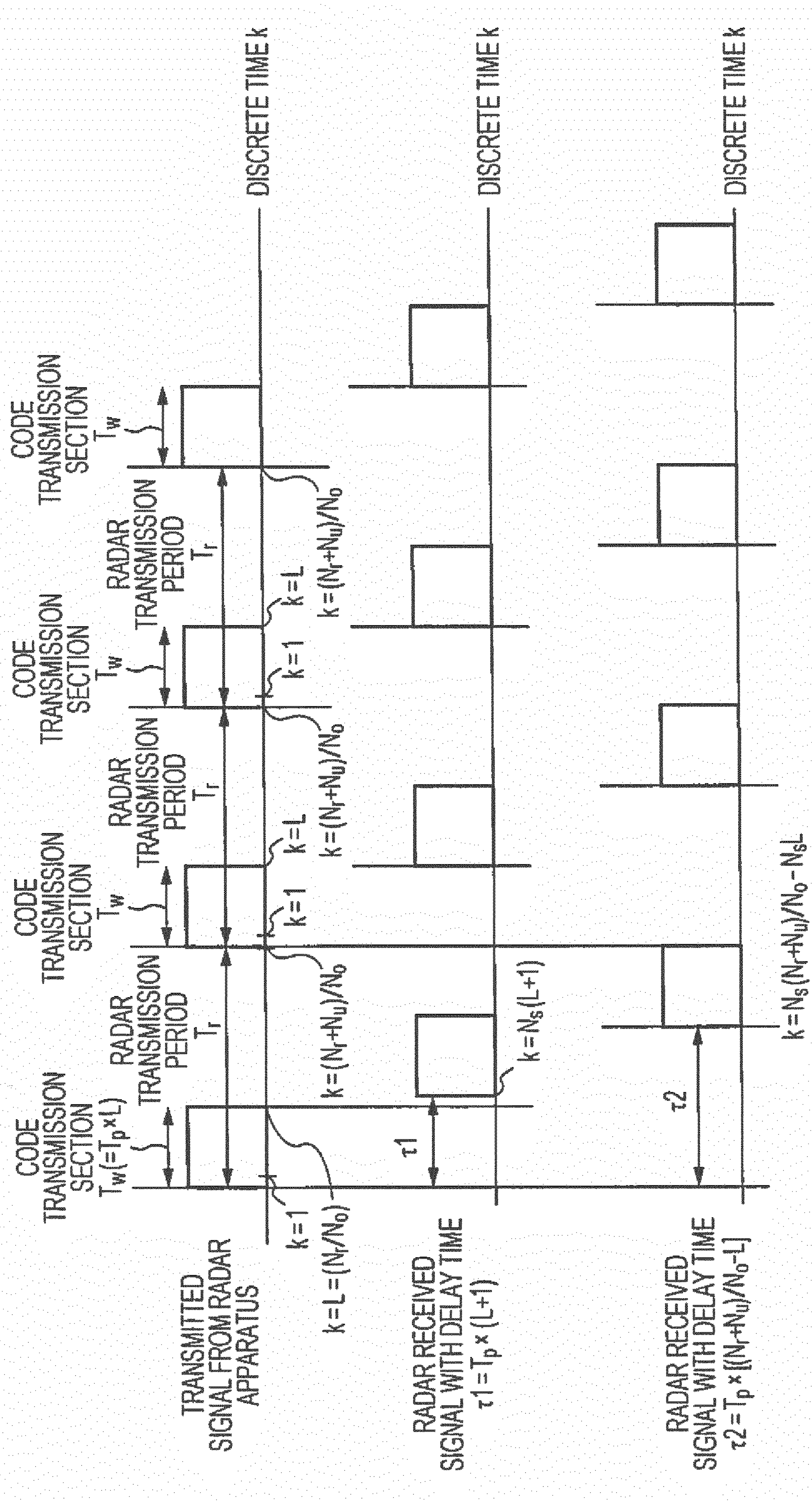
CODE TRANSMISSION SECTION $T_w(=T_p \times L)$
RADAR TRANSMISSION PERIOD $T_r$
CODE TRANSMISSION SECTION $T_w$
RADAR TRANSMISSION PERIOD $T_r$
CODE TRANSMISSION SECTION $T_w$
RADAR TRANSMISSION PERIOD $T_r$
CODE TRANSMISSION SECTION $T_w$
DISCRETE TIME k
DISCRETE TIME k
DISCRETE TIME k
TRANSMITTED SIGNAL FROM RADAR APPARATUS
k=1
$k=L=(N_r/N_o)$
$k=(N_r+N_u)/N_o$
k=1
k=L
$k=(N_r+N_u)/N_o$
k=1
k=L
$k=(N_r+N_u)/N_o$
$k=(N_r+N_u)/N_o$
RADAR RECEIVED SIGNAL WITH DELAY TIME $\tau 1=T_p \times (L+1)$
$\tau 1$
$k=N_s(L+1)$
RADAR RECEIVED SIGNAL WITH DELAY TIME $\tau 2=T_p \times [(N_r+N_u)/N_o-L]$
$\tau 2$
$k=N_s(N_r+N_u)/N_o-N_sL$

FIG. 7

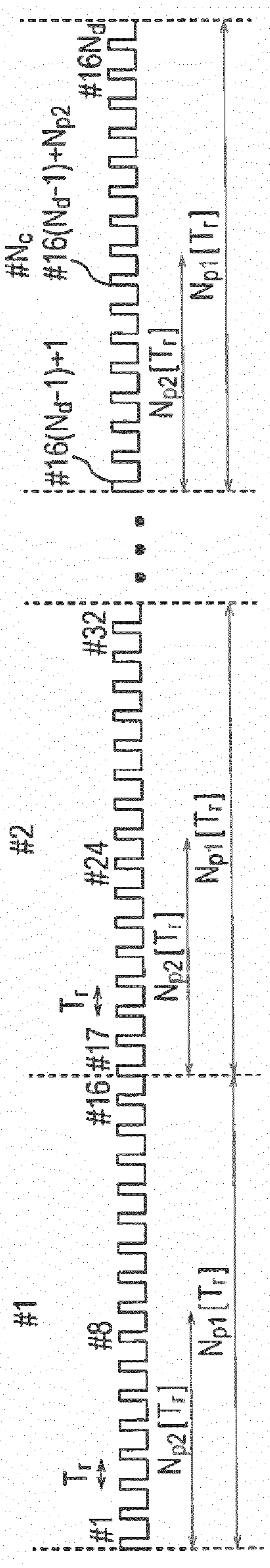

FIG. 8

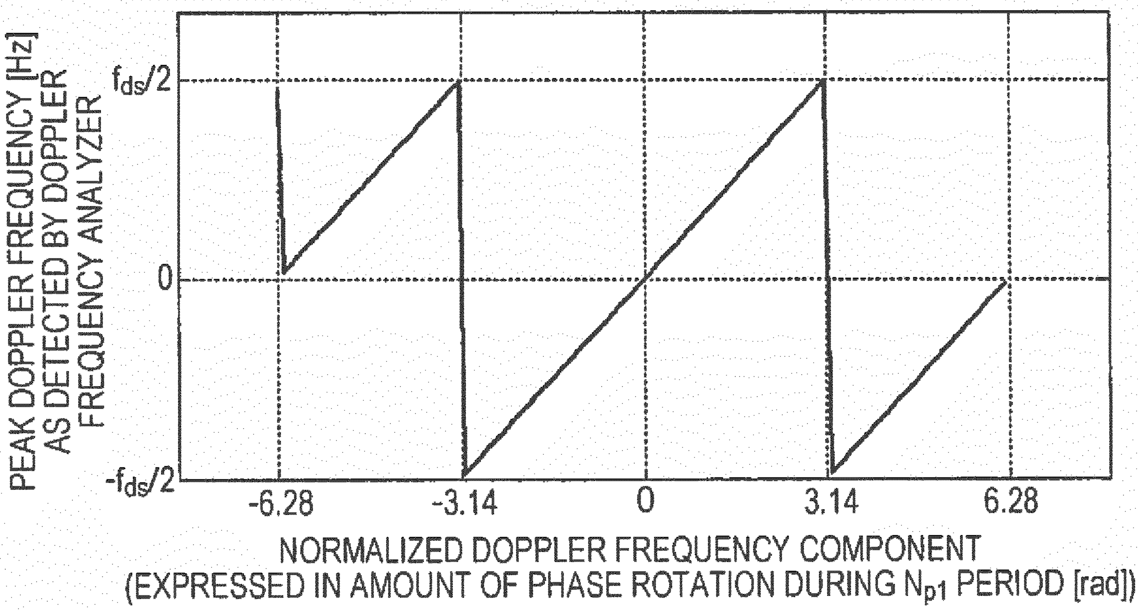
PEAK DOPPLER FREQUENCY [Hz]
AS DETECTED BY DOPPLER
FREQUENCY ANALYZER
$f_{ds}/2$
0
$-f_{ds}/2$
-6.28
-3.14
0
3.14
6.28
NORMALIZED DOPPLER FREQUENCY COMPONENT
(EXPRESSED IN AMOUNT OF PHASE ROTATION DURING $N_{p1}$ PERIOD [rad])

FIG. 9A

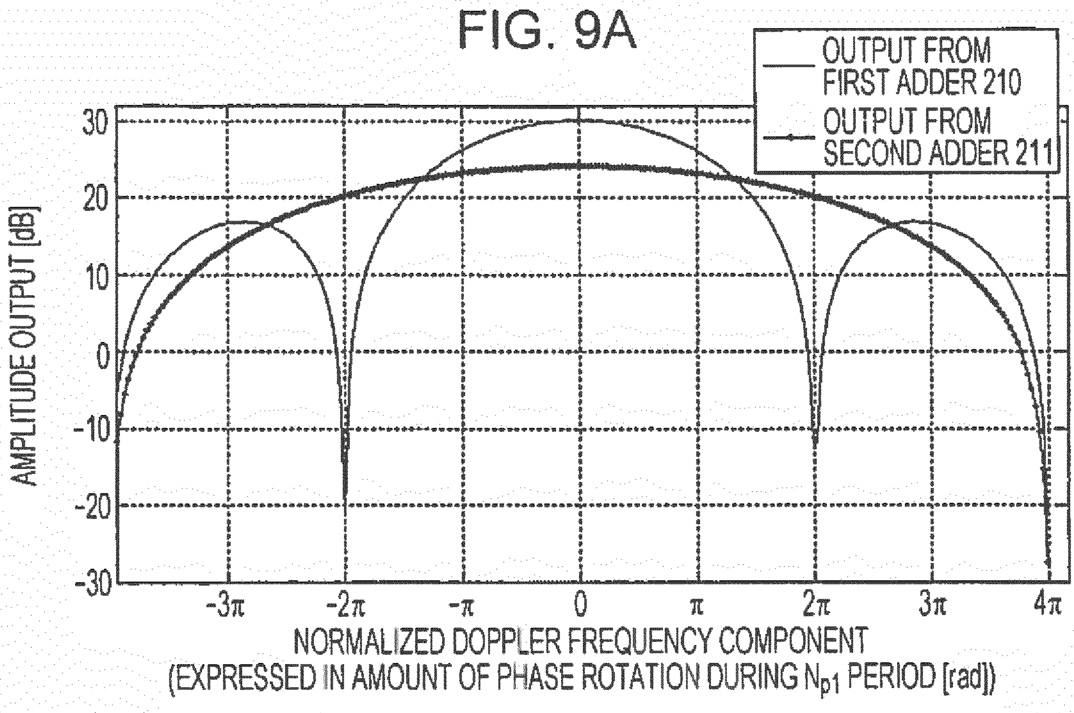
OUTPUT FROM FIRST ADDER 210
OUTPUT FROM SECOND ADDER 211
AMPLITUDE OUTPUT [dB]
30
20
10
0
-10
-20
-30
-3π
-2π
-π
0
π
2π
3π
4π
NORMALIZED DOPPLER FREQUENCY COMPONENT
(EXPRESSED IN AMOUNT OF PHASE ROTATION DURING $N_{p1}$ PERIOD [rad])

FIG. 9B

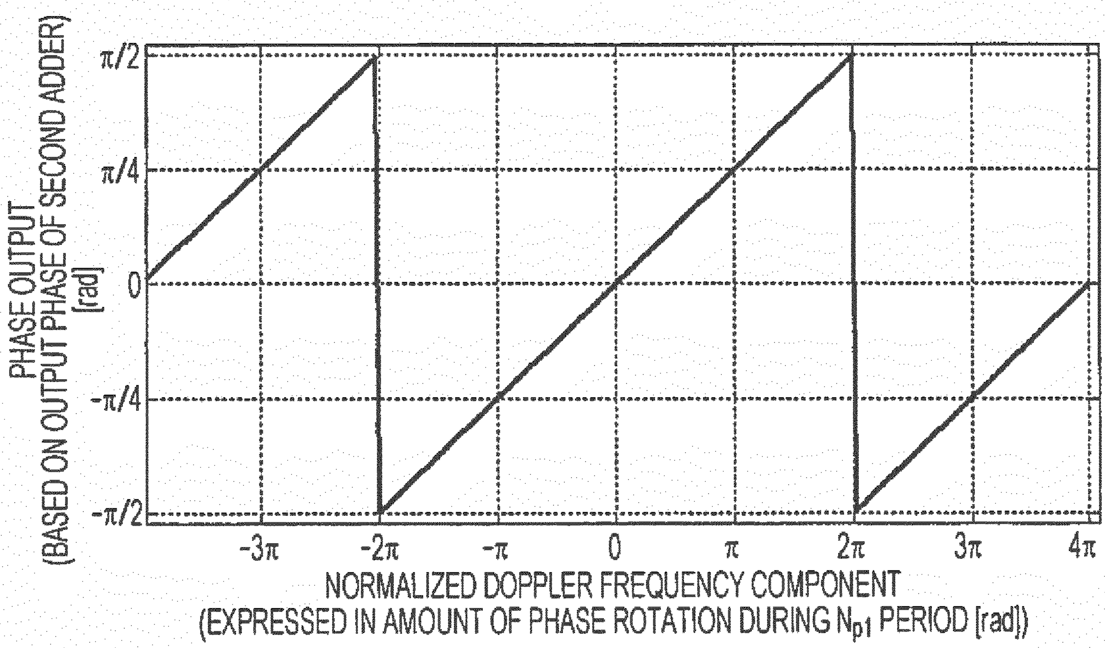
PHASE OUTPUT
(BASED ON OUTPUT PHASE OF SECOND ADDER)
[rad]
π/2
π/4
0
-π/4
-π/2
-3π
-2π
-π
0
π
2π
3π
4π
NORMALIZED DOPPLER FREQUENCY COMPONENT
(EXPRESSED IN AMOUNT OF PHASE ROTATION DURING $N_{p1}$ PERIOD [rad])

FIG. 10A

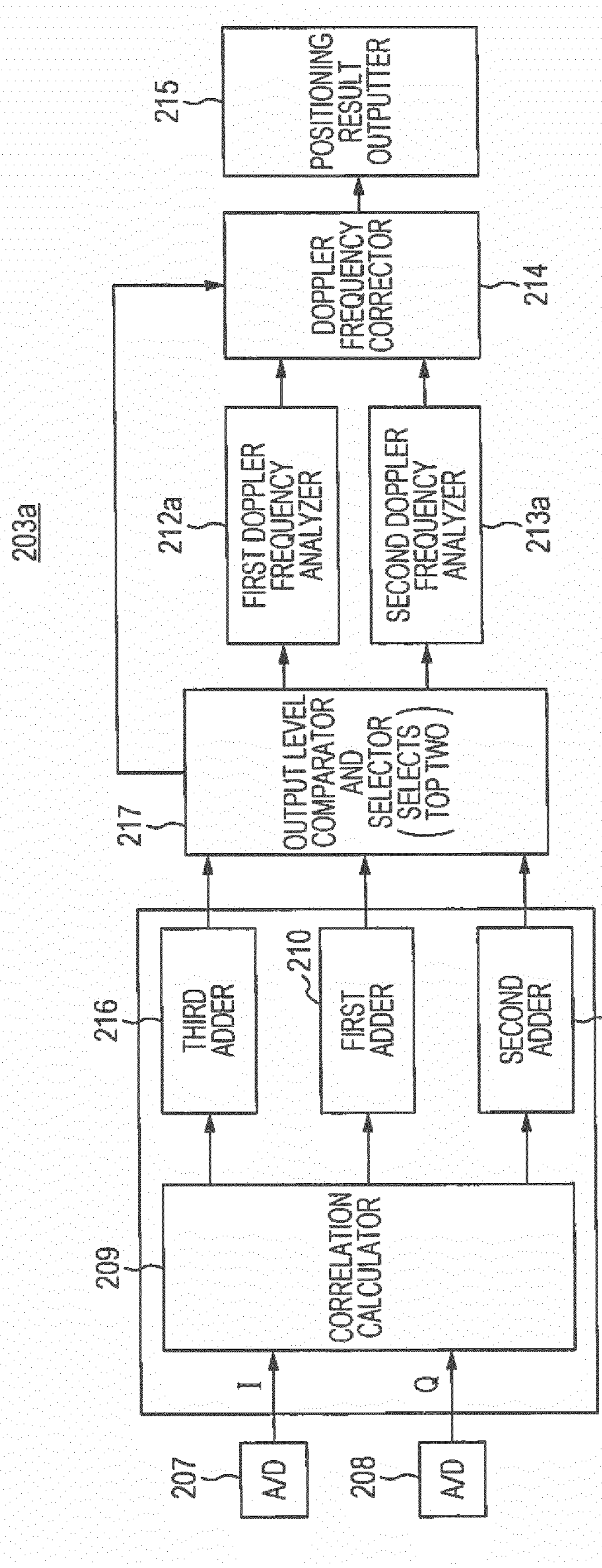
203a
207
A/D
208
A/D
I
Q
209
CORRELATION CALCULATOR
216
THIRD ADDER
210
FIRST ADDER
SECOND ADDER
211
217
OUTPUT LEVEL COMPARATOR AND SELECTOR ( SELECTS TOP TWO )
212a
FIRST DOPPLER FREQUENCY ANALYZER
SECOND DOPPLER FREQUENCY ANALYZER
213a
DOPPLER FREQUENCY CORRECTOR
214
215
POSITIONING RESULT OUTPUTTER

FIG. 10B

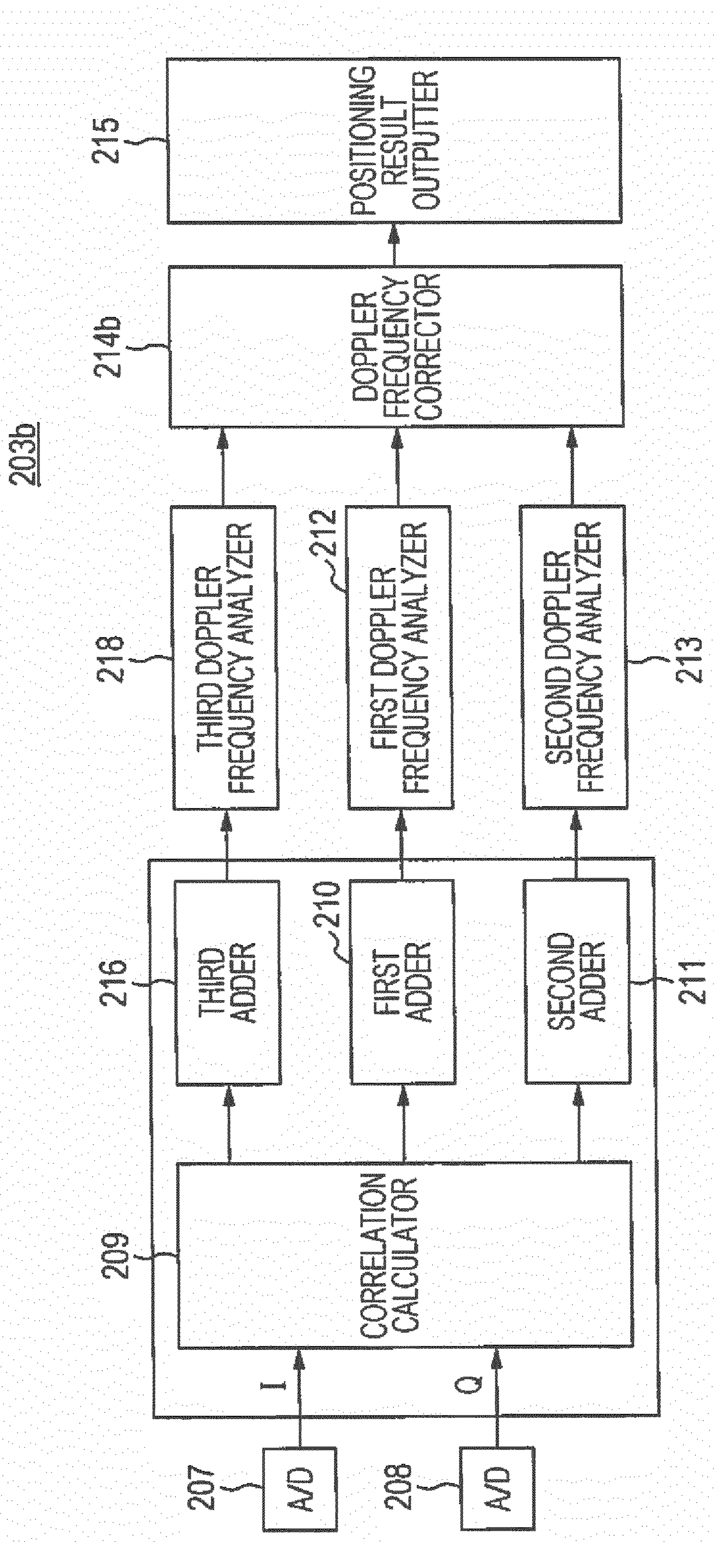
203b
207
A/D
208
A/D
I
Q
209
CORRELATION CALCULATOR
216
THIRD ADDER
210
FIRST ADDER
211
SECOND ADDER
218
THIRD DOPPLER FREQUENCY ANALYZER
212
FIRST DOPPLER FREQUENCY ANALYZER
213
SECOND DOPPLER FREQUENCY ANALYZER
214b
DOPPLER FREQUENCY CORRECTOR
215
POSITIONING RESULT OUTPUTTER

FIG. 11A

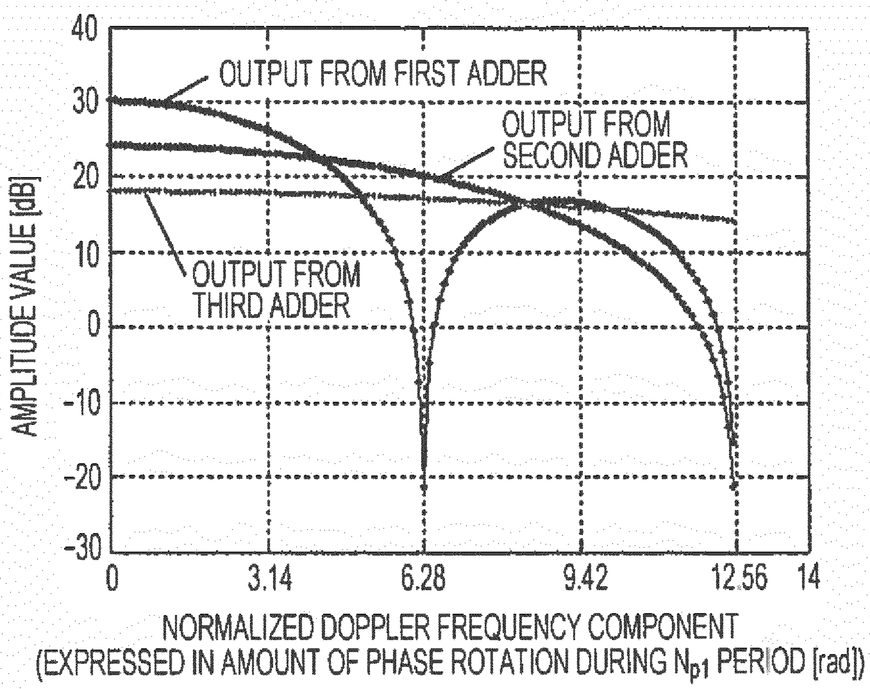


FIG. 11B

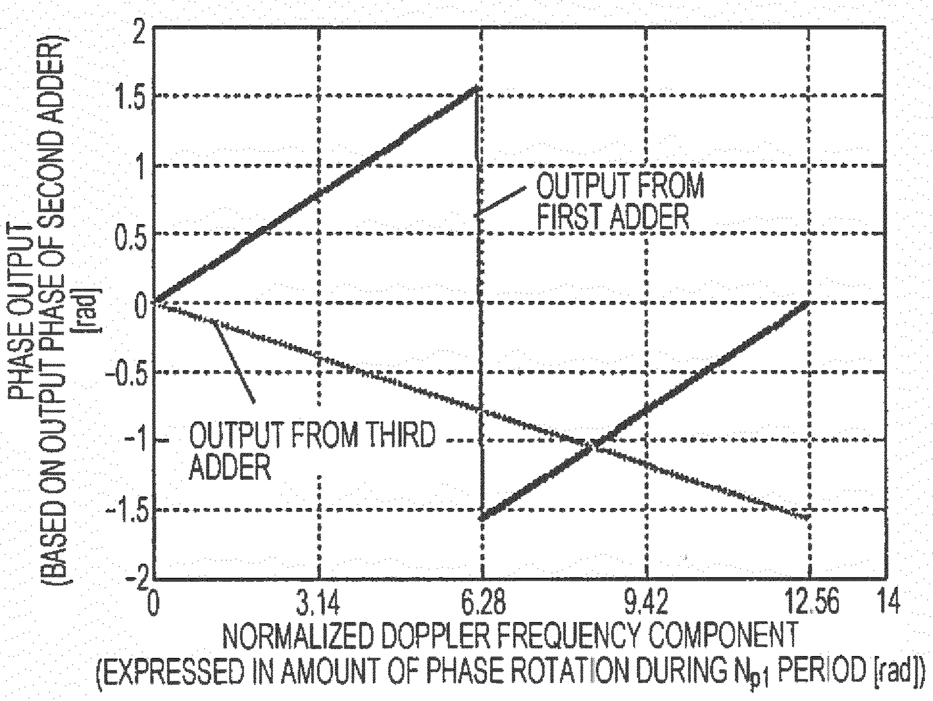

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002131421 A
- JP 2014089115 A
- US 20130127655 A
- US 6489923 B
- US 20130176166 A


### Non-patent literature cited in the description


- **BUDISIN, S.Z.** New complementary pairs of sequences. *Electron. Lett,* 1990, vol. 26 (13), 881-883